# EUROPÄISCHE PATENTSCHRIFT

(11) **EP 1 878 181 B1**
(45) Veröffentlichungstag und Bekanntmachung des Hinweises auf die Patenterteilung: **11.02.2009**
(21) Anmeldenummer: 06722831.2
(22) Anmeldetag: 02.05.2006
(51) Int. Cl.: H04L 12/58, H04W 4/00

(54) **VERFAHREN UND KOMMUNIKATIONSEINRICHTUNG ZUR HANDHABUNG EINES MMS-VERSIONSKONFLIKTS**
METHOD AND COMMUNICATIONS DEVICE FOR HANDLING AN MMS VERSION CONFLICT
PROCEDE ET DISPOSITIF DE COMMUNICATION PERMETTANT DE GERER UN CONFLIT DE VERSION MMS

(30) Priorität: 04.05.2005 DE 102005020916
(43) Veröffentlichungstag der Anmeldung: 16.01.2008
(73) Patentinhaber: Infineon Technologies AG, 85579 Neubiberg (DE)
(72) Erfinder: PRENZEL, Ralf, 38259 Salzgitter (DE); SCHMIDT, Andreas, 38124 Braunschweig (DE)
(74) Vertreter: Viering, Jentschura & Partner
(86) Internationale Anmeldenummer: PCT/DE2006/000763
(87) Internationale Veröffentlichungsnummer: WO 2006/116986

(56) Entgegenhaltungen:
- WO-A-03/015368
- ANONYMOUS: "Multimedia Messaging Service Encapsulation Protocol Candidate Version 1.2" 23. Juni 2004 (2004-06-23), Seiten 1-118, XP002399503 Open Mobile Alliance Gefunden im Internet: URL:http://www.openmobilealliance.org/rele ase_program/docs/MMS/v1_2-20040623-C/OMA-M MS-ENC-V1_2-20040323-C.pdf> [gefunden am 2006-09-18]

## Beschreibung

Die Erfindung betrifft ein Verfahren sowie eine Kommunikationseinrichtung zum Bearbeiten einer Nachricht.

Das Mobilfunk-Kommunikationssystem GSM (GSM: Global System for Mobile Communications) bietet zusätzlich zu der Sprachtelefonie-Kommunikation auch die Möglichkeit, mittels des so genannten Kurznachrichten-Dienstes (Short Message Service, SMS) kurze Textnachrichten von bis zu 160 Zeichen Länge zu versenden bzw, zu empfangen.

Als Nachfolger dieses Dienstes wird derzeit der so genannte Multimedianachrichten-Dienst (Multimedia Messaging Service, MMS) vorgesehen, wie er beispielsweise in [1] und [2] beschrieben ist. MMS ermöglicht das mobile Versenden und den mobilen Empfang für Nachrichten mit multimedialen Inhalten, das heißt das Versenden und das Empfangen von Nachrichten mittels Mobilfunksignalen, wobei die Nachrichten im Folgenden als Multimedianachrichten (Multimedia Message, MM) bezeichnet werden. Im Gegensatz zum SMS entfällt bei MMS die Beschränkung auf reine Textinhalte von 160 Zeichen Länge. Eine Multimedianachricht kann aus mehreren Multimedia-Nachrichtenelementen von unterschiedlichen Dateitypen (beispielsweise textuelle Daten, Audiodaten, Standbilddaten, Videobilddaten) und Dateiformaten (bei textuellen Daten beispielsweise Winword-Format, bei Audiodaten beispielsweise MP3, bei Standbild beispielsweise GIF oder JPEG, bei Videobilddaten beispielsweise MPEG) bestehen. Selbst ein zeitlich festgelegter Ablauf von kleinen multimedialen Präsentationen wird ermöglicht, was MMS insbesondere für so genannte Mehrwertdienste (Value Added Service, VAS) interessant macht.

MMS ist nicht auf Mobilfunk-Kommunikationsnetzwerke gemäß dem GSM-Kommunikationsstandard beschränkt, sondern kann beispielsweise auch in Mobilfunk-Kommunikationssystemen betrieben werden, die gemäß dem GPRS-Kommunikationsstandard (General Packet Radio Service), dem EDGE-Kommunikationsstandard (Enhanced Data for GSM Evolution) oder gemäß dem UMTS-Kommunikationsstandard (Universal Mobile Telecommunication System) ausgebildet sind.

Derzeit wird MMS von zwei Standardisierungsgremien, nämlich dem 3^{rd} Generation Partnership Project-Standardisierungsgremium (3GPP) und dem Open Mobile Alliance-Standardisierungsgremium (OMA) standardisiert. In dem 3GPP-Standardisierungsgremium werden schwerpunktmäßig alle Netzwerkschnittstellen von MMS standardisiert, während in dem OMA-Standardisierungsgremium schwerpunktmäßig die Luftschnittstelle behandelt wird. Eine klare Trennung zwischen diesen beiden Bereichen ist nicht möglich, da die Grenzen zwischen den Schnittstellen immer mehr verwischen. Die OMA ist im Sommer 2002 aus dem WAP-Forum (WAP: Wireless Application Protocol) hervorgegangen.

Die bereits verfügbare Version 1.0 des MMS entspricht dem 3GPP MMS Release '99 und umfasst lediglich einige MMS-Basisfunktionalitäten. Von einigen GSM Mobilfunk-Kommunikationsnetzbetreibern wird derzeit die Markteinführung einer neueren Version 1.2 (OMA MMS Version 1.2) von MMS mit Nachdruck vorangetrieben. Dies entspricht 3GPP MMS Release 5.

Zeitlich wird dazu in den beiden oben genannten Standardisierungsgremien bereits an einer Version 1.3 (bzw. einem 3GPP MMS Release 6) gearbeitet. Die Version 1.1 von MMS (bzw. entspricht 3GPP MMS Release 4) spielt derzeit keine große Rolle, da sie schon von der Version 1.2 von MMS überholt wurde.

Die folgende Tabelle 1 zeigt eine Übersicht über die derzeit vorgesehenen und verfügbaren bzw. in der Standardisierung sich befindlichen MMS-Versionen.

**Tabelle 1: Übersicht über die unterschiedlichen MMS Versionen**

| **3GPP MMS** | **WAP MMS** | **OMA MMS** | **STATUS** |
|---|---|---|---|
| R'99 | v1.0 | - | bereits im Markt eingeführt |
| Rel-4 | - | val.1 | wird von der GSMA abgelehnt |
| Rel-5 | - | v1.2 | Markeinführung in Kürze |
| Rel-6 | - | v1.3 | 'Draft'-Status |

In naher Zukunft wird somit zum ersten Mal der Fall eintreten, dass alte MMS-Implementierungen, das heißt Implementierungen von MMS älterer Versionen mit neueren Versionen, das heißt mit neueren, aktuelleren MMS-Implementierungen fehlerfrei zusammenarbeiten sollen.

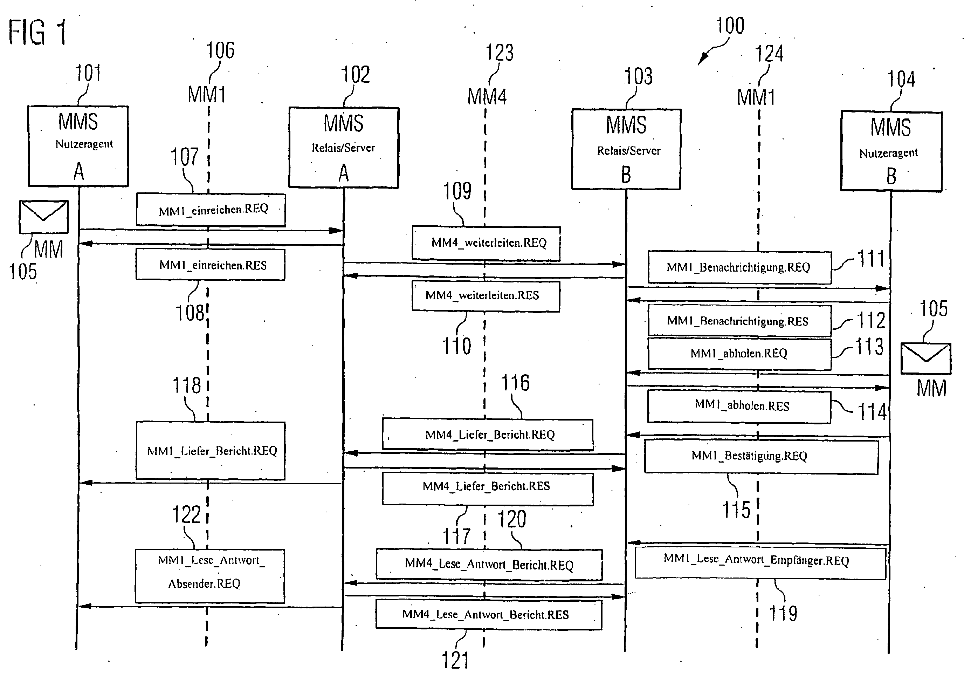

Nachfolgend wird anhand des in **Fig.1** dargestellten Nachrichtenflussdiagramms 100 der Austausch von Daten zwischen einem ersten MMS-User-Agent 101, einer ersten MMS Relay/Servereinheit 102, einer zweiten MMS Relay/Servereinheit 103 sowie einem zweiten MMS-User-Agent 104 dargestellt, welche beim Versenden und Empfangen einer Multimedianachricht 105 zwischen den oben beschriebenen Datenübertragungseinheiten 101, 102, 103, 104 unter Verwendung der in [2] definierten so genannten 3GPP Abstract Messages als Protokolldateneinheiten genauer beschrieben. Der erste MMS-User-Agent 101 ist mit der ersten MMS Relay/Servereinheit 102 mittels einer ersten (Luft-)Schnittstelle MM1 106 verbunden. Die erste MMS Relay/Servereinheit 102 ist mit der zweiten MMS Relay/Servereinheit 103 mittels einer MM4-Schnittstelle 123 verbunden. Die zweite MMS Relay/Servereinheit 103 ist mit dem zweiten MMS-User-Agent 104 mittels einer zweiten MM1-(Luft)Schnittstelle MM1 124 verbunden.

Eine Abstract Message weist mindestens ein Information Element als Kopffeld auf. Gemäß MMS kann der Absender der Multimedianachricht 105, das heißt in diesem Fall der erste MMS-User-Agent 101, die Multimedianachricht 105 über die erste (Luft-)Schnittstelle MM1 106 an die erste MMS Relay/Servereinheit 102 seines MMS-Dienstleistungsanbieters mit der Abstract Message MM1_submit.REQ 107 schicken.

Die erste MMS Relay/Servereinheit 102 bestätigt den korrekten Empfang der Multimedianachricht 105 von dem ersten MMS-User-Agent 101 mit der Abstract Message MM1_submit.RES 108.

Die Übertragung der Multimedianachricht 105 an die zweite MMS Relay/Servereinheit 103, welche sich in dem Versorgungsbereich, das heißt im MMSE (Multimedia Messaging Service Environment) eines zweiten MMS-Dienstleistungsanbieters befindet, in welchem sich auch der Empfänger, das heißt der zweite User-Agent 104, befindet, geschieht mit dem Abstract Message-Paar MM4_forward.REQ 109, welche die Multimedianachricht 105 in den Nutzdaten dieser Protokolldateneinheit enthält, und MM4_forward.RES 110, welche die Rückmeldung auf den korrekten Empfang der MM4_forward.REQ 109 und damit auch der Multimedianachricht 105, enthält.

Danach wird der Empfänger, das heißt der zweite MMS-User-Agent 104 von der zweiten MMS Relay/Servereinheit 103 über die zum Herunterladen bereitliegende Multimedianachricht 105 mit der Abstract Message MM1_notification.REQ 111 informiert. In dieser MMS-Empfänger-Benachrichtigung 111 ist eine Referenz auf den Speicherplatz der Multimedianachricht 105 in dem MMSE B des Empfängers, das heißt des zweiten MMS-User-Agents 104, in Form eines Uniform Resource Identifiers (URI) enthalten. Die Abstract Message MM1_notification.RES 112 dient vorrangig als Bestätigung für den korrekten Empfang der MMS-Empfänger-Benachrichtigung 111, welche auch als "MMS Notification" bezeichnet wird, am zweiten MMS-User-Agent 104.

Mit der Abstract Message MM1_retrieve.REQ 113 kann der zweite MMS-User-Agent 104 das Herunterladen einer auf der zweiten MMS Relay/Servereinheit 103 bereitliegenden Multimedianachricht 105 initiierten. Die Zustellung der Multimedianachricht 105 kann von der zweiten MMS Relay/Servereinheit 103 an den zweiten MMS-User-Agent 104 erfolgen mittels der Abstract Message MM1_retrieve.RES 114.

Die zweite MMS Relay/Servereinheit 103 kann mit der Abstract Message MM1_acknowledgement.REQ 115 von dem zweiten MMS-User-Agent 104 über den Ausgang des Herunterladens der Multimedianachricht 105 informiert werden. Die zweite MMS Relay/Servereinheit 103 kann, falls der Absender, das'heißt der erste MMS-User-Agent 101 dies so beantragt hat, die erste MMS Relay/Servereinheit 102 mit dem Abstract Message-Paar MM4_delivery_report.REQ 116, welche den Auslieferungsbericht enthält, und MM4_delivery_report.RES 117, welche die Rückmeldung über den korrekten Empfang der MM4_delivery_report.REQ-Nachricht 116 darstellt, über den Ausgang der Zustellung der Multimedianachricht 105 an den zweiten MMS-User-Agent 104 informieren.

Die zweite MMS Relay/Servereinheit 102 kann nun ihrerseits den Auslieferungsbericht an den ersten MMS-User-Agent 101 mit Hilfe der Abstract Message MM1_delivery_report.REQ 118 weiterleiten.

Ferner kann der erste MMS-User-Agent 101 auch eine Lesebestätigung beantragen und zugestellt bekommen.

Zu diesem Zweck hat man die folgenden Abstract Messages definiert:
- MMl_read_reply_recipient.REQ 119, welche die Lesebestätigung enthält und welche von dem zweiten MMS-User-Agent 104 zu der zweiten MMS Relay/Servereinheit 103 übertragen wird;
- MM4_read_reply_report.REQ 120, welche die Lesebestätigung enthält und welche von der zweiten MMS Relay/Servereinheit 103 zu der ersten MMS Relay/Servereinheit 102 übertragen wird;
- MM4_read_reply_report.RES 121, welche die Rückmeldung auf den Erhalt der MM4_read_reply_report.REQ-Nachricht 120 enthält und von der ersten MMS Relay/Servereinheit 102 erzeugt und zu der zweiten MMS Relay/Servereinheit 103 übertragen wird; und
- MM1_read_reply_originator.REQ 122, welche die Lesebestätigung enthält und welche von der ersten MMS Relay/Servereinheit 102 erzeugt und zu dem ersten MMS-User-Agent 101 übertragen wird.

Im Unterschied zum Auslieferungsbericht, der in der zweiten MMS Relay/Servereinheit 103 erzeugt wird, wird die Lesebestätigung in dem zweiten MMS-User-Agent 104 selbst erzeugt und von dort über die zweite MMS Relay/Servereinheit 103, die erste MMS Relay/Servereinheit 102 und schließlich zu dem ersten MMS-User-Agent 101 übertragen.

Es ist in diesem Zusammenhang anzumerken, dass es über die oben beschriebenen und in dem in Fig.1 dargestellten Nachrichtenflussdiagramm 100 gemäß 3GPP definierten Abstract Messages hinaus noch zusätzliche Abstract Messages gibt, die beispielsweise vorgesehen sind für die Multimedianachrichten-Box-Funktionalität, beispielsweise für das Speichern und Verwalten von Multimedianachrichten im Kommunikationsnetzwerk.

Für jede der oben beschriebenen 3GPP Abstract Messages für die (Luft-)Schnittstelle MM1 existiert eine entsprechende OMA MMS-Protokolldateneinheit (OMA MMS Protocol Data Unit, OMA MMS PDU). Details über den Aufbau und den Inhalt der jeweils vorgesehenen OMA MMS PDUs sind in [3] spezifiziert. Neben MMSspezifischen Kopffeldern, die in [3] spezifiziert sind, können auch Standard-RFC-822-Kopffelder, wie sie beispielsweise in [6] beschrieben sind, Bestandteil einer OMA MMS PDU sein. Die Reihenfolge der Kopffelder ist grundsätzlich beliebig, jedoch sollten gemäß [3] die folgenden drei Kopffelder - falls vorhanden - jeweils am Beginn einer OMA MMS PDU stehen:
- X-Mms-Nachrichten-Typ, welche die Art der OMA MMS PDU anzeigt,
- X-Mms-Transaktions-Identifikationsangabe (X-Mms-Transaktions-ID), welche die Zusammengehörigkeit zweier OMA MMS PDUs anzeigt, und
- X-Mms-MMS-Version, welche die jeweils unterstützte MMS-Version anzeigt.

In der folgenden Tabelle 2 ist beispielhaft der Beginn, das heißt nur die oben beschriebenen ersten drei Kopffelder der M-Send.conf OMA MMS PDU gemäß in [3] in englischer Sprache gezeigt, welche der 3GPP Abstract Message MM1_submit.REQ 107 entspricht:

**Tabelle 2: Der Anfang der M-Send.conf OMA MMS PDU gemäß [3]**

| | | |
|---|---|---|
| X-Mms-Nachrichten-Typ | Nachrichten-Typ-Wert = m-send-conf | Obligatorisch. Spezifiziert den PDU-Typ. |
| X-Mms-Transaktions-ID | Transaktions-id-Wert | Obligatorisch. Diese Transaktions-ID identifiziert nur die M-Send.conf und die entsprechende M-Send.req. |
| X-Mms-MMS-Version | MMS-Versions-Wert | Obligatorisch. Die MMS Versionsnummer. Gemäß dieser Spezifikation ist die Version 1.2 |
| · · · | · · · | · · · |

Zwei zusammengehörige OMA MMS PDUs, beispielsweise ein Request-/Response-Pärchen, werden üblicherweise durch ein eindeutiges Transaktions-Identifikationsmerkmal als zusammengehörig gekennzeichnet, beispielsweise mittels der oben beschriebenen X-Mms-Transaktions-ID. So haben beispielsweise die M-Send.req PDU (entspricht der 3GPP Abstract Message MM1_submit.REQ 107) und die M-Send.conf PDU (entspricht der 3GPP Abstract Message MM1_submit.RES 108) das gleiche Transaktions-Identifikationsmerkmal, das heißt beide weisen im Kopffeld X-Mms-Transaktions-ID den gleichen Feldwert auf. Auf diese Weise weiß der eine Multimedianachricht sendende MMS-User-Agent genau, welche M-Send.conf PDU zu welcher M-Send.req PDU gehört und kann so eindeutig über den Ausgang eines Sendeversuchs informiert werden.

Für den Transport der MMS-Daten über die (Luft-)Schnittstelle MM1 106, 124 werden die OMA MMS PDUs in WSP PDUs oder HTTP-Messages der beiden in MMS benutzten Transportprotokolle WSP (**W**ireless **S**ession **P**rotocol, beschrieben in [4]) und HTTP (Hypertext Transfer Protocol, beschrieben in [5]) eingefügt.

Ferner ist in [3] ein Verfahren zum Auflösen von Versionskonflikten beschrieben, das auf der Auswertung der im Allgemeinen zweiteiligen (aus "major version number" und "minor version number" bestehenden), im Kopffeld X-Mms-MMS-Version enthaltenen MMS-Versionsnummer basiert (vgl. obige Tabelle 2). Grundsätzlich soll bei einem erkannten Versionskonflikt gemäß [3] eine MMS Relay/Servereinheit stets mit einer M-Send.conf PDU (entspricht der 3GPP Abstract Message MM1_submit.RES) der Version 1.0 und ein MMS-User-Agent stets mit einer M-NotifyResp.ind PDU (entspricht der 3GPP Abstract Message MM1_notification.RES) der Version 1.0 antworten.

Dabei soll gemäß [3] die MMS Relay/Servereinheit den binär codierten Antwort-Status-Wert "Error-unsupported-message" (<Octet 136>) in die M-Send.conf PDU und der MMS-User-Agent den binär codierten Status-Wert "Unrecognised" (<Octet 132>) in die M-NotifyResp.ind PDU eintragen.

In den beiden im Rahmen des in [3] beschriebenen Algorithmus zum Auflösen von Versionskonflikten verwendeten OMA MMS PDUs M-Send.conf und M-NotifyResp.ind ist die Existenz der drei oben beschriebenen Kopffelder X-Mms-Nachrichten-Typ, X-Mms-Transaktions-ID und X-Mms-MMS-Version am Beginn der jeweiligen Protokolldateneinheit obligatorisch.

Andere OMA MMS PDUs, wie beispielsweise die M-Delivery.ind PDU, die M-Acknowledge.ind PDU, die M-Read-Rec.ind und die M-Read-Orig.ind PDU, beinhalten jedoch kein X-Mms-Transaktions-ID-Kopffeld. Bei diesen OMA MMS PDUs ist es folglich nicht möglich, ein Protokolldateneinheiten-Paar mittels eines eindeutig zugeordneten Transaktions-Identifikationsmerkmals als zusammengehörig zu kennzeichnen. Im normalen MMS-Betrieb stellt dies keinen Nachteil dar, da die erwähnten OMA MMS PDUs nicht paarweise auftreten, das heißt beispielsweise, eine M-Delivery.ind PDU wird standardkonform nicht durch eine entsprechende M-Delivery.conf PDU bestätigt, wobei anzumerken ist, dass eine solche OMA MMS PDU überhaupt nicht definiert ist.

Erst bei einem Versionskonflikt des eingesetzten MMS führt die Vorgehensweise gemäß dem Stand der Technik zu Problemen, da gemäß [3] zwar das Abschicken einer M-Send.conf-Protokolldateneinheit oder einer M-NotifyResp.ind-Protokolldateneinheit verlangt wird, jedoch kein eindeutig zugeordnetes Transaktions-Identifikationsmerkmal existiert. Da sich gegenwärtig nur Mobilfunk-Kommunikationsendgeräte und Kommunikationsnetzwerk-Komponenten der WAP MMS Version 1.0 im Markt befinden, das heißt derzeit überhaupt verfügbar sind, ist dieses Problem bislang noch nicht in Erscheinung getreten. Dies wird sich jedoch ändern, sobald Mobilfunk-Kommunikationsendgeräte und Kommunikationsnetzwerk-Komponenten einer neueren Version des MMS verfügbar sind.

Denkbar ist weiterhin, dass auch in Zukunft weitere OMA MMS PDUs neu definiert werden, die kein X-Mms-Transaktions-ID-Kopffeld beinhalten und folglich eine eindeutige Zuordnung zu anderen, beispielsweise "Response"-PDUs, wie oben beschrieben, nicht erlauben.

Gerade für diese Szenarien ist der in [3] beschriebene Algorithmus zur Auflösung möglicher Versionskonflikte insbesondere für die oben beschriebenen OMA MMS PDUs nicht einsetzbar. Betroffen sind allgemein diejenigen Protokolldateneinheiten, bei denen gemäß [3] oder gemäß zukünftiger Kommunikationsstandards kein Kopffeld zur Zuordnung eines Transaktions-Identifikationsmerkmals vorgesehen ist.

In all diesen Fällen ist das Verhalten des Multimedianachrichtendienstes in seinem Betrieb unvorhersehbar.

Für eine Kommunikationsstandard-konforme Implementierung der MMS Relay/Servereinheit besteht darüber hinaus im Falle der M-Delivery.ind und M-Read-Orig.ind PDUs für den MMS-Dienstleistungsanbieter des die Multimedianachricht sendenden MMS-User-Agents generell der Nachteil, dass dieser aufgrund theoretisch jederzeit eintreffender Rückmeldungen aufgrund von Versionskonflikten nicht weiß, wie lange er in seinem Zuständigkeitsbereich MMSE die Datensätze für einen Auslieferungsbericht oder eine Lesebestätigung vorrätig halten muss.

Die von dem Absender, das heißt von dem ersten MMS-User-Agent 101 vergebene Gültigkeitsdauer einer Multimedianachricht ist in diesem Fall auch keine Hilfe, da ein Auslieferungsbericht oder eine Lesebestätigung in der Regel auch nach Ablauf der Gültigkeit der zugehörigen Multimedianachricht noch von Interesse für den ursprünglichen Absender der Multimedianachricht, das heißt für den ersten MMS-User-Agent 101, ist. Gemäß dem Stand der Technik muss der MMS Dienstleistungsanbieter A des ersten MMS-User-Agents 101 alle Auslieferungsberichte und Lesebestätigungen theoretisch endlos in seinem Zuständigkeitsbericht MMSE A speichern, was einen theoretisch beliebig großen Speicher erfordert.

In Druckschrift [7] ist ein Verfahren zum Übermitteln von Multimedia-Nachrichten beschrieben, bei dem durch einen Datenbank-Zugriff Informationen über die Möglichkeiten eines Empfängers Multimedia-Daten zu empfangen ermittelt werden und gemäß den Informationen eine Notfizierungsnachricht erzeugt wird und an den Empfänger oder auch an den Sender von Multimedia-Daten übermittelt wird.

Druckschrift [8] offenbart ein Verfahren zum Übermitteln einer MMS-Nachricht, bei dem die MMS-Nachricht konvertiert wird, falls der vorgesehene Empfänger MMS-Nachrichten nichtempfangen kann.

In Druckschrift [9] sind Möglichkeiten beschrieben, wie eine MMS-Client-Einheit auf eine PDU mit einer Hauptversionsnummer ("major version number") oder einer Nebenversionsnummer ("minor version number") reagiert, die sich von der Versionsnummer der von ihr implementierten MMS-Entität unterscheidet. Empfängt die MMS-Client-Einheit eine PDU mit einer Hauptversionsnummer, die von ihr nicht unterstützt wird, so beantwortet sie die PDU mit einer PDU die den Statuswert "Unrecognised" enthält.

In Druckschrift [10] ist beschrieben, Codewörter, beispielsweise im Header einer MMS-Nachricht, textuell zu codieren, so dass ein Empfänger, dem eine binäre Darstellung einer Information unbekannt ist, die Information dennoch verarbeiten kann.

Der Erfindung liegt das Problem zugrunde, ein Verfahren und eine Kommunikationseinrichtung zum Bearbeiten einer ersten Nachricht anzugeben, bei dem insbesondere das Problem der unbegrenzt dauernden Speicherung eines Auslieferungsberichts oder einer Lesebestätigung vermieden wird.

Das Problem wird durch ein Verfahren und eine Kommunikationseinrichtung zum Bearbeiten einer ersten Nachricht mit den Merkmalen gemäß den unabhängigen Patentansprüchen gelöst.

Bei einem Verfahren zum Bearbeiten einer ersten Nachricht, welche von einer ersten Kommunikationseinrichtung gesendet wurde, durch eine zweite Kommunikationseinrichtung wird von der zweiten Kommunikationseinrichtung die Version des Multimedianachricht-Dienstes ermittelt, gemäß welcher die erste Nachricht codiert ist. Von der zweiten Kommunikationseinrichtung wird ferner überprüft, ob sie die erste Nachricht gemäß der ermittelten Version verarbeiten kann. Für den Fall, dass die zweite Kommunikationseinrichtung die erste Nachricht gemäß der ermittelten Version verarbeiten kann, erfolgt die Verarbeitung der ersten Nachricht gemäß der ermittelten Version des Multimedianachrichten-Dienstes seitens der zweiten Kommunikationseinrichtung. Für den Fall jedoch, dass die zweite Kommunikationseinrichtung die erste Nachricht nicht gemäß der ermittelten Version des Multimedianachrichten-Dienstes verarbeiten kann, erzeugt die zweite Kommunikationseinrichtung unter Verwendung einer Ergänzungsinformation eine zweite Nachricht und sendet diese an die erste Kommunikationseinrichtung. Die Ergänzungsinformation ist in der zweiten Nachricht enthalten und aus der Ergänzungsinformation ist ermittelbar, welche Nachricht von der zweiten Kommunikationseinrichtung nicht verarbeitet werden kann. Die Ergänzungsinformation soll idealerweise Multimedianachrichten-Dienst-Versions-unabhängig sein, d.h. auch von Kommunikationseinrichtungen erkannt werden und verarbeitbar sein, die eine geringere Version des Multimedianachrichten-Dienstes unterstützen, also beispielsweise eine Basisversion des Multimedianachrichten-Dienstes.

Unter einer Basisversion des Multimedianachrichten-Dienstes ist im Rahmen dieser Beschreibung allgemein eine Version des Multimedianachrichten-Dienstes zu verstehen, die älter ist als die Version des Multimedianachrichten-Dienstes, gemäß der die nicht verarbeitbare Nachricht übermittelt wurde. Beispielsweise kann die Basisversion eine vorgegebene und beispielsweise von einem MMS-Provider definierte Version des Multimedianachrichten-Dienstes sein, beispielsweise die erste Version des Multimedianachrichten-Dienstes, beispielsweise die MMS Version 1.0. Es kann jedoch auch eine beliebige Zwischenversion des Multimedianachrichten-Dienstes (beispielsweise MMS Version 1.2 bei weiteren Nachfolgeversionen des MMS) als Basisversion verwendet werden, solange sie gegenüber der Version des Multimedianachrichten-Dienstes, gemäß der die nicht verarbeitbare Nachricht übermittelt wurde, einen kleineren Funktionalitätsraum abdeckt, anders ausgedrückt, weniger und eventuell einfachere oder andere Funktionen bereitstellt.

Eine Kommunikationseinrichtung zum Verarbeiten einer ersten Nachricht weist eine Versions-Ermittlungseinheit auf. Die Versions-Ermittlungseinheit ist derart eingerichtet, dass sie die Version des Multimedianachrichten-Dienstes, gemäß welcher die erste Nachricht codiert ist, ermittelt. Ferner ist eine Prüfeinheit vorgesehen, welche eingerichtet ist zum Prüfen, ob die Kommunikationseinrichtung die erste Nachricht gemäß der ermittelten Version verarbeiten kann. Eine ebenfalls vorgesehene Verarbeitungseinheit ist eingerichtet, eine empfangene Nachricht gemäß einer vorgegebenen Version zu verarbeiten. Ferner ist eine Versions-Konflikteinheit vorgesehen, welche eingerichtet ist, für den Fall, dass die Kommunikationseinrichtung die erste Nachricht nicht verarbeiten kann, unter Verwendung einer Ergänzungsinformation eine zweite Nachricht zu erzeugen, wobei die Ergänzungsinformation in der zweiten Nachricht enthalten ist und wobei aus der Ergänzungsinformation ermittelbar ist, welche Nachricht von der zweiten Kommunikationseinrichtung nicht verarbeitet werden kann. Die Ergänzungsinformation soll idealerweise Multimedianachrichten-Dienst-Versions-unabhängig sein, d.h. auch von Kommunikationseinrichtungen erkannt werden und verarbeitbar sein, die eine geringere Version des Multimedianachrichten-Dienstes unterstützen, also beispielsweise eine Basisversion des Multimedianachrichten-Dienstes.

Anschaulich wird unter Verwendung einer Ergänzungsinformation, welche von der Version des jeweils verwendeten Multimedianachrichten-Dienstes unabhängig ist und in der Basisversion des Multimedianachrichten-Dienstes nicht vorgesehen ist und damit gegenüber dieser ergänzt ist, dem jeweiligen Kommunikationspartner auf einfache Weise für jede Version des im Markt sich befindenden und damit verfügbaren Multimedianachrichten-Dienstes mitgeteilt, ob und warum ein Versionskonflikt aufgetreten ist und damit, dass die erste Nachricht von dem Empfänger derselben nicht verarbeitet werden kann gemäß der Version des im Rahmen des Codierens und Sendens der ersten Nachricht verwendeten Version des Multimedianachrichten-Dienstes.

Auch ist aufgrund der Verwendung einer von der Version des verwendeten Multimedianachrichten-Dienstes unabhängigen Ergänzungsinformation und aufgrund der Tatsache, dass mittels der Ergänzungsinformation die erste Nachricht, das heißt diejenige Nachricht, welche von der diese empfangenden Kommunikationseinrichtung nicht verarbeitet werden kann, eindeutig identifiziert werden kann, ermöglicht, dass die gegebenenfalls jeweils vorgesehenen Auslieferungsbericht-Nachrichten oder Lesebestätigungs-Nachrichten nicht mehr für eine ungewisse Zeitdauer archiviert, das heißt gespeichert werden müssen.

Ferner ist ein Vorteil der Erfindung darin zu sehen, dass, unabhängig von der Version des eingesetzten Multimedianachrichten-Dienstes eine vorbestimmte abgesicherte Versionskonflikt-Fehlerbehandlung bereitgestellt wird und damit das Verhalten des Multimedianachrichten-Dienstes selbst bei einem auftretenden Versionskonflikt vorhersagbar wird. Damit wird die Verlässlichkeit des gesamten Multimedianachrichten-Dienstes mit einer Mehrzahl vorhandener und genutzter Versionen des Multimedianachrichten-Dienstes erstmals sichergestellt.

Die Erfindung kann in Software, das heißt mittels eines Computerprogramms, in Hardware, das heißt beispielsweise mittels einer speziellen elektronischen Schaltung oder in beliebig hybrider Form, das heißt in beliebigen Teilen mittels Software und Hardware realisiert werden.

Anschaulich kann die Erfindung in der Ergänzung der Basisversion eines Multimedianachrichten-Dienstes um unterschiedliche Mechanismen gesehen werden, mittels welchen sichergestellt wird, dass selbst bei einem auftretenden Versionskonflikt dem Sender eine Information dahingehend übermittelt wird, dass ein Versionskonflikt aufgetreten ist und gegebenenfalls aufgrund welcher gesendeten Nachricht dieser Versionskonflikt verursacht wurde.

Bevorzugte Ausgestaltungen der Erfindung ergeben sich aus den abhängigen Ansprüchen.

Die im Folgenden beschriebenen Ausgestaltungen der Erfindung gelten sowohl für das Verfahren als auch für die Kommunikationseinrichtung zum Verarbeiten einer Nachricht.

Die erste Nachricht kann von der ersten Kommunikationseinrichtung zu der zweiten Kommunikationseinrichtung übertragen werden.

Wie oben beschrieben wurde, sind gemäß unterschiedlichen Aspekten der Erfindung unterschiedliche Mechanismen und auch unterschiedliche Arten der Ergänzungsinformation vorgesehen, um ein sicheres vorhersagbares Verhalten des Multimedianachrichten-Dienstes zu gewährleisten.

Gemäß einem ersten Aspekt der Erfindung ist es vorgesehen, dass die zweite Nachricht in einem ihrer Kopffelder eine vorgegebenen Versionskonflikt-Information als Ergänzungsinformation enthält, mit welcher angegeben wird, dass ein Versionskonflikt bei der ersten Nachricht aufgetreten ist. Die Versionskonflikt-Information kann in ein allgemein für einen anderen Zweck in der Basisversion des Multimedianachrichten-Dienstes schon vorhandenes Kopffeld eingeschrieben werden, wobei damit anschaulich eine "Zweckentfremdung" des in der Basisversion des Multimedianachrichten-Dienstes vorgesehenen Feldes erfolgt, indem in dieses Feld die Versionskonflikt-Information eingeschrieben wird. Alternativ kann die Versionskonflikt-Information auch im Nutzdatenfeldbereich (,Body' der Nachricht) eingeschrieben werden.

Die Versionskonflikt-Information kann in einen Tränsaktions-Identifikationsangabe-Kopffeldbereich enthalten sein bzw. darin eingeschrieben werden, beispielsweise in den in der Basisversion des Multimedianachrichten-Dienstes beispielsweise vorhandenen Kopffeldbereich für die Transaktions-ID (OMA Terminologie: X-Mms-Transaktions-ID).

Die Versionskonflikt-Information kann eine die erste Kommunikationseinrichtung identifizierende Information enthalten. Die Information kann die Adresse der ersten Kommunikationseinrichtung sein oder eine Referenz auf eine Information, aus der die Adresse der ersten Kommunikationseinrichtung eindeutig ableitbar ist bzw. aus welcher die Adresse der ersten Kommunikationseinrichtung eindeutig ermittelbar ist. Der Begriff Adresse ist hier ganz allgemein zu verstehen und kann unter anderem eine Telefonnummer, eine E-mail-Adresse, eine IP-Adresse usw. umfassen.

Alternativ kann die Versionskonflikt-Information die Nachrichten-Identifikationsangabe der ersten Nachricht enthalten bzw. eine Information enthalten, aus welcher die Nachrichten-Identifikationsangabe der ersten Nachricht eindeutig ableitbar oder ermittelbar ist.

Die Versionskonflikt-Information kann alternative zu den beiden oben beschriebenen Inhalten oder in Ergänzung dazu auch eine Zeitinformation (einen sogenannten "Zeitstempel") umfassen, die ebenfalls zur Ermittlung der Adresse der ersten Kommunikationseinrichtung bzw. der die Nachrichten-Identifikationsangabe der ersten Nachricht herangezogen werden kann.

Gemäß einem anderen Aspekt der Erfindung wird als Ergänzungsinformation eine gegenüber der Basisversion des Multimedianachrichten-Dienstes zusätzlich vorgesehene Protokolldateneinheit verwendet.

Hierbei ist es gemäß einer Ausgestaltung der Erfindung vorgesehen, dass die zusätzliche Protokolldateneinheit eine Antwortnachricht zu einer in der Basisversion des Multimedianachrichten-Dienstes vorgesehenen Anforderungsnachricht verwendet wird, wobei die Antwortnachricht und die zugehörige Anforderungsnachricht im Rahmen des Kommunikationsprotokolls des Multimedianachrichten-Dienstes ein Anforderungs-Antwort-Nachrichten-Paar bilden.

Anders ausgedrückt bedeutet dies anschaulich, dass die zusätzliche Protokolldateneinheit eine Protokolldateneinheit ist, welche einer in der Basisversion des Multimedianachrichten-Dienstes an sich singulär (ohne eine zugehörige Nachricht, welche mit der singulären Nachricht ein Nachrichten-Paar bildet) vorgesehenen Anforderungsnachricht zugeordnet wird. Damit bildet die gemäß der Basisversion des Multimedianachrichten-Dienstes keine einen "Gegenpart" darstellende Antwortnachricht aufweisende Anforderungsnachricht nunmehr gemeinsam mit der zusätzlich neu vorgesehenen Antwortnachricht ein neues Anforderungs-/Antwort-Nachrichten-Paar.

Die Anforderungsnachricht und die Antwortnachricht des Anforderungs-/Antwort-Nachrichten-Paares können die gleiche Transaktions-Identifikationsangabe enthalten und können somit als eine gemeinsame Einheit adressiert und identifiziert werden wie ein Anforderungs-/Antwort-Nachrichten-Paar gemäß der Basisversion des Multimedianachrichten-Dienstes.

Gemäß diesem Aspekt der Erfindung wird auf sehr einfache Weise ohne "Zweckentfremdung" eines in der Basisversion vorgesehenen Kopffeldes ermöglicht, beispielsweise durch Verwendung der gleichen Transaktions-Identifikationsangabe, dass bei Empfang der jeweiligen Antwortnachricht die zweite Kommunikationseinrichtung erkennt, dass die erste Nachricht, anders ausgedrückt, die Anforderungsnachricht zu einem Versionskonflikt geführt hat, was durch das Senden der Antwort-Nachricht mit derselben Transaktions-Identifikationsangabe wie sie die Anforderungsnachricht enthält, signalisiert wird.

Gemäß einem dritten Aspekt der Erfindung kann es vorgesehen sein, dass die zweite Nachricht eine Kopie der ersten Nachricht enthält, womit auf sehr einfache Weise erreicht wird, dass der Sender, das heißt die sendende Kommunikationseinrichtung, unmittelbar anhand der Kopie der ersten Nachricht erkennen kann, welche Nachricht zu einem Versionskonflikt geführt hat. Dies ist sogar ermöglicht ohne mehrere zusätzliche unterschiedliche Anforderungs-/Antworten-Nachrichten-Paare vorzusehen. Damit wird anschaulich gemäß diesem Aspekt der Erfindung eine neue Art von Protokolldateneinheit vorgesehen, in welche die Kopie der ersten Nachricht eingepackt wird, das heißt eingebettet wird und an die erste Kommunikationseinrichtung übertragen wird.

Die erste Nachricht und/oder die zweite Nachricht können/kann eine (Mobilfunk-)Protokollnachricht sein, anders ausgedrückt eine Mobilfunk-Protokolldateneinheit, welche im Rahmen eines Mobilfunk-Kommunikationsprotokolls verwendet wird (z.B. eine ,3GPP Abstract Message' oder eine ,OMA MMS PDU' wie sie einleitend beschrieben worden sind).

Allgemein kann die Erfindung eingesetzt werden im Rahmen jedes beliebigen Multimedianachrichten-Dienstes und gemeinsam mit dem Multimedianachrichten-Dienst beispielsweise eingesetzten Mobilfunk-Kommunikationsnetzwerkes, beispielsweise bei einem Mobilfunk-Kommunikationsnetzwerk gemäß dem GSM-Kommunikationsstandard, gemäß dem GPRS-Kommunikationsstandard, gemäß dem EDGE-Kommunikationsstandard oder gemäß dem UMTS-Kommunikationsstandard.

Gemäß einer ersten alternativen Ausgestaltung der Erfindung ist es vorgesehen, dass die erste Kommunikationseinrichtung ein Mobilfunk-Kommunikationsendgerät ist und die zweite Kommunikationseinrichtung eine Multimedianachricht-Mobilfunk-Relaiseinrichtung. Gemäß dieser Ausgestaltung der Erfindung wird somit die Überprüfung auf einen möglichen Versionskonflikt hin in der Multimedianachricht-Mobilfunk-Relaiseinrichtung, beispielsweise in einer Multimedianachricht-Mobilfunk-Relay/Servereinheit (auch MMS Relay/Server, MMS Proxy-Relay oder MMSC genannt) durchgeführt.

Alternativ ist es vorgesehen, dass die erste Kommunikationseinrichtung eine Multimedianachricht-Mobilfunk-Relaiseinrichtung (auch MMS Relay/Server, MMS Proxy-Relay oder MMSC genannt) ist und die zweite Kommunikationseinrichtung ein Mobilfunk-Kommunikationsendgerät ist, in welchem Fall die Versionskonflikt-Überprüfung in dem Mobilfunk-Kommunikationsendgerät selbst durchgeführt wird.

Die Basisversion des verwendeten Multimedianachrichten-Dienstes kann die MMS-Version 1.0 sein.

Ausführungsbeispiele der Erfindung sind in den Figuren dargestellt und werden im Folgenden näher erläutert.

Es zeigen
- Figur 1: ein Nachrichtenflussdiagramm, in dem die im Rahmen der Übertragung einer Multimedianachricht vorgesehenen Multimedianachrichten-Dienst-Protokollnachrichten gemäß dem Stand der Technik dargestellt sind;
- Figur 2: ein Blockdiagramm, in dem ein MMS- Kommunikationsnetzwerk gemäß den Ausführungsformen der Erfindung dargestellt ist;
- Figur 3: ein Blockdiagramm, in dem unterschiedliche Schnittstellen einer MMS Relay/Servereinheit gemäß den Ausführungsbeispielen der Erfindung dargestellt ist;
- Figur 4: ein Ablaufdiagramm, in Verfahrensschritte gemäß einem ersten Ausführungsbeispiel der Erfindung dargestellt sind;
- Figur 5: ein Ablaufdiagramm, in dem Verfahrensschritte gemäß einem ersten Ausführungsbeispiel der Erfindung dargestellt sind;
- Figur 6: ein Nachrichtenflussdiagramm, in dem die im Rahmen eines dritten Ausführungsbeispiels der Erfindung vorgesehenen Multimedianachrichten-Dienst- Protokollnachrichten im Rahmen der Übertragung einer Multimedianachricht dargestellt sind;
- Figur 7: ein Nachrichtenflussdiagramm, in dem die im Rahmen eines vierten Ausführungsbeispiels der Erfindung vorgesehenen Multimedianachrichten-Dienst- Protokollnachrichten im Rahmen der Übertragung einer Multimedianachricht dargestellt sind;

Im Folgenden werden, soweit zweckmäßig, für gleiche oder ähnliche Elemente identische Bezugszeichen verwendet.

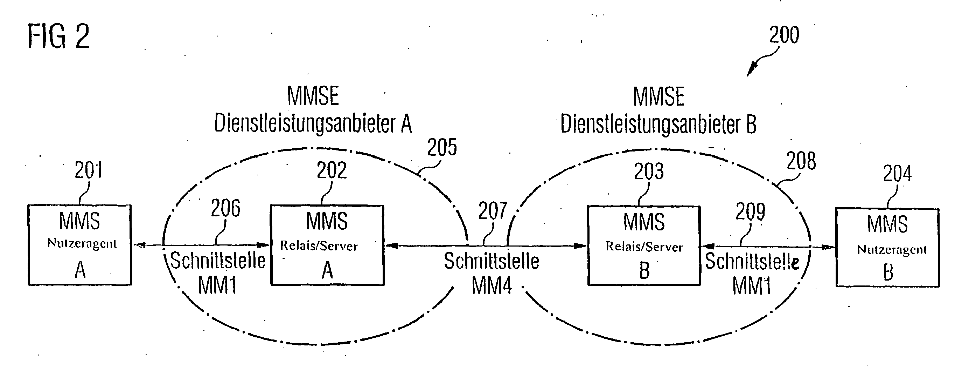

**Fig.2** zeigt in einem Blockdiagramm 200 eine Multimedianachrichten-Dienst-Kommunikationsnetzwerk-Architektur (Multimedia Messaging Service Kommunikationsnetzwerk-Architektur, MMS-Kommunikationsnetzwerk-Architektur) gemäß den Ausführungsformen der Erfindung.

Das MMS Kommunikationsnetzwerk ist bis auf die im Folgenden im Detail beschriebenen Erweiterungen eingerichtet, wie in [1] und in [2] beschrieben. Die somit gemäß 3GPP ausgebildete MMS-Kommunikationsnetzwerk-Architektur weist einen ersten MMS-User-Agent 201 auf, der mittels einer ersten MMS Relay/Servereinheit A 202 und einer zweiten MMS Relay/Servereinheit B 203 mit einem zweiten MMS-User-Agent B 204 verbunden ist.

Unter einem MMS-User-Agent wird im Weiteren ohne Einschränkung der Allgemeingültigkeit beispielsweise ein Software-Programm oder eine spezielle elektronische Schaltung verstanden, das oder die beispielsweise auf einem Mobilfunk-Kommunikationsendgerät oder auf einem an ein Mobilfunk-Kommunikationsendgerät angeschlossenes Gerät, beispielsweise einem Laptop, einem Personal Digital Assistant oder einer anderen Art von Computer, den Multimedianachrichten-Dienst MMS realisiert.

Unter einer MMS Relay/Servereinheit ist beispielsweise ein Kommunikationsnetzwerk-Element zu verstehen, das in einem Zuständigkeitsbereich, auch bezeichnet als Multimedia Messaging Service Environment, MMSE, eines MMS-Dienstleistungsanbieters (MMS Providers) den sich darin befindenden MMS-User-Agents die MMS-Funktionalität zur Verfügung stellt.

Gemäß Fig.2 befindet sich die erste Relay/Servereinheit A 202 in einem Zuständigkeitsbereich MMSE A 205 eines ersten MMS Dienstleistungsanbieters A und ist mittels einer ersten Luft-Schnittstelle MM1 206 Kommunikationsendgerät-seitig mit dem ersten MMS-User-Agent A 201 verbunden. Kommunikationsnetzwerkseitig ist die erste MMS Relay/Servereinheit A 202 mit der zweiten MSS Relay/Servereinheit B 203 mittels einer Kommunikationsnetzwerk-Schnittstelle MM4 207 verbunden. Die zweite MMS Relay/Servereinheit B 203 befindet sich in einem Zuständigkeitsbereich MMSE B 208 eines zweiten MMS-Dienstleitungsanbieters B. Die zweite MMS Relay/Servereinheit B 203 ist ihrerseits Kommunikationsendgerät-seitig mittels einer zweiten Luft-Schnittstelle MM1 209 mit dem zweiten MMS-User-Agent 204 verbunden.

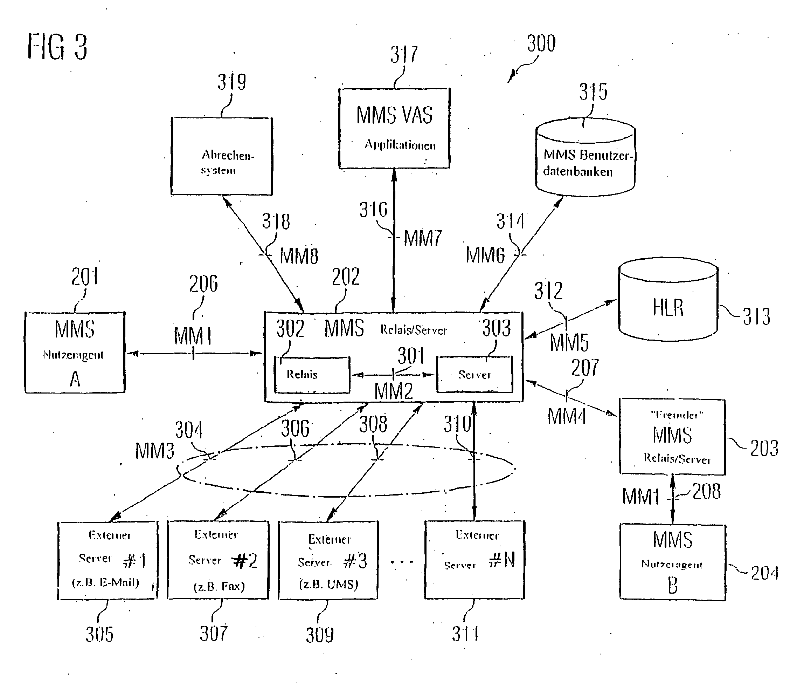

Die in 3GPP definierten Schnittstellen zum Anschluss weiterer Kommunikationsnetzwerk-Elemente an eine MMS Relay/Servereinheit, gemäß diesen Ausführungsbeispielen dargestellt für die erste MMS Relay/Servereinheit 202 sind in einem Blockdiagramm 300 in Fig.3 symbolisch dargestellt. Zusätzlich zu der ersten Luft-Schnittstelle MM1 206, mittels der der erste MMS-User-Agent A 201 und die erste MMS Relay/Servereinheit A 202 miteinander in Verbindung stehen, sind noch eine Vielzahl zusätzlicher Schnittstellen vorgesehen, die unterschiedlichen Zwecken dienen und entsprechend ihrer jeweils vorgesehenen Funktionalität eingerichtet sind.

Die erste MMS Relay/Servereinheit 202 wie auch die zweite MMS Relay/Servereinheit 203 weisen jeweils eine Relaiseinrichtung 302 sowie eine Servereinheit 303 auf, welche mittels einer Relais/Server-Schnittstelle MM2 301 miteinander gekoppelt sind.

Ferner weist jede MMS Relay/Servereinheit Schnittstellen MM3 zum Anschließen unterschiedlicher beliebiger externer Servereinheiten auf, beispielsweise eine erste MM3-Schnittstelle 304 zum Anschließen einer E-Mail-Servereinheit 305, eine zweite MM3-Schnittstelle 306 zum Anschließen einer Fax-Servereinheit 307, eine dritte MM3-Schnittstelle 308 zum Anschließen einer UMS-Servereinheit 309 (Unified Messaging System-Servereinheit). Grundsätzlich können eine beliebige Anzahl von MM3-Schnittstellen vorgesehen sein, symbolisiert in Fig.3 mittels einer N-ten MM3-Schnittstelle 310 zum Anschließen einer Servereinheit #N 311 an die erste MMS Relay/Servereinheit 202.

Die Anbindung fremder MMS Dienstleistungsanbieter (MMS Provider), beispielsweise die Anbindung der zweiten MMS Relay/Servereinheit B 203 an die erste MMS Relay/Servereinheit A 202 wird mittels der Schnittstelle MM4 207 realisiert.

Eine MM5-Schnittstelle 312 verbindet die erste MMS Relay/Servereinheit 202 mit dem Home Location Register (HLR) 313 des jeweiligen Mobilfunk-Kommunikationsnetzbetreibers, wobei in dem Home Location Register die individuellen Kundendaten eines jeden Mobilfunk-Teilnehmers gespeichert sind. Es ist in diesem Zusammenhang anzumerken, dass das Home Location Register 313 üblicherweise im Zuständigkeitsbereich des Mobilfunk-Kommunikationsnetzbetreibers liegt, der nicht zwangsläufig mit dem MMS-Dienstleistungsanbieter identisch sein muss.

Der Anschluss einer oder mehrerer MMS-Nutzerdatenbank(en) (MMS User Data Base(s)) 315 erfolgt über eine weitere Schnittstelle MM6 314.

Mittels einer Schnittstelle MM7 316 wird der Anschluss von einem oder mehreren Server(n) 317 ermöglicht, welche(r) von einem Value Added Service Provider (VASP) betrieben wird und der den MMS-Nutzern Mehrwertdienste (Value Added Services, VAS) zur Verfügung stellen kann.

Schließlich ist noch eine Schnittstelle MM8 318 vorgesehen zum Anschließen einer Kommunikationsnetzwerk-Einheit 319 an die erste MMS Relay/Servereinheit 202, in welcher Kommunikationsnetzwerk-Einheit 319 alle relevanten Informationen zum Vergebühren des MMS gesammelt und ausgewertet werden.

Weitere Schnittstellen (MM9 und MM10) werden derzeit in den Standardisierungsgremien diskutiert und können in zukünftigen Ausführungsformen ergänzend vorgesehen sein.

Gemäß einem ersten Ausführungsbeispiel der Erfindung ist hinsichtlich der ausgetauschten Protokollnachrichten gegenüber dem in Fig.1 dargestellten Nachrichtenflussdiagramm 100 keine Änderung vorgesehen, weshalb die einzelnen Einheiten ihre Nachrichten gemäß dem in Fig.1 dargestellten Nachrichtenflussdiagramm 100 austauschen, beispielsweise zum Übertragen der Multimedianachricht 105 von dem ersten MMS User-Agent 101, 201 zu dem zweiten MMS User-Agent 104, 204. Auf eine erneute Beschreibung des Nachrichtenflussdiagramms 100 wird verzichtet, es wird jedoch darauf hingewiesen, dass dieses gemäß dem ersten Ausführungsbeispiel mit den folgenden Erweiterungen implementiert ist.

Eine Multimedianachricht 105 kann aus mehreren Multimedia-Nachrichtenelementen von unterschiedlichen Dateitypen (beispielsweise textuelle Daten, Audiodaten, Standbilddaten, Videobilddaten) und Dateiformaten (bei textuellen Daten beispielsweise Winword-Format, bei Audiodaten beispielsweise MP3, bei Standbild beispielsweise GIF oder JPEG, bei Videobilddaten beispielsweise MPEG) bestehen. Selbst ein zeitlich festgelegter Ablauf von kleinen multimedialen Präsentationen wird ermöglicht.

Gemäß einer ersten Ausführungsform der Erfindung bleiben die OMA MMS Protokolldateneinheiten, welche kein X-Mms-Transaktions-ID-Kopffeld enthalten, unverändert. Anstelle eines von der sendenden MMS-Einheit vergebenen und später eindeutig zuzuordnenden Transaktions-Identifikationsmerkmals wird - wenn möglich - in das X-Mms-Transaktions-ID-Kopffeld der M-Send.conf PDU bzw. der M-NotifyResp.ind PDU ein anderer Feldwert eingetragen, welcher einen eindeutigen Rückschluss auf die erste Transaktion und damit auf die jeweils gesendete MM1_submit.RES 108 (im Falle der M-Send.conf PDU) bzw. auf die jeweilige Abstract Message MM1_notification.RES 112 (im Fall der M-NotifyResp.ind PDU) zulässt.

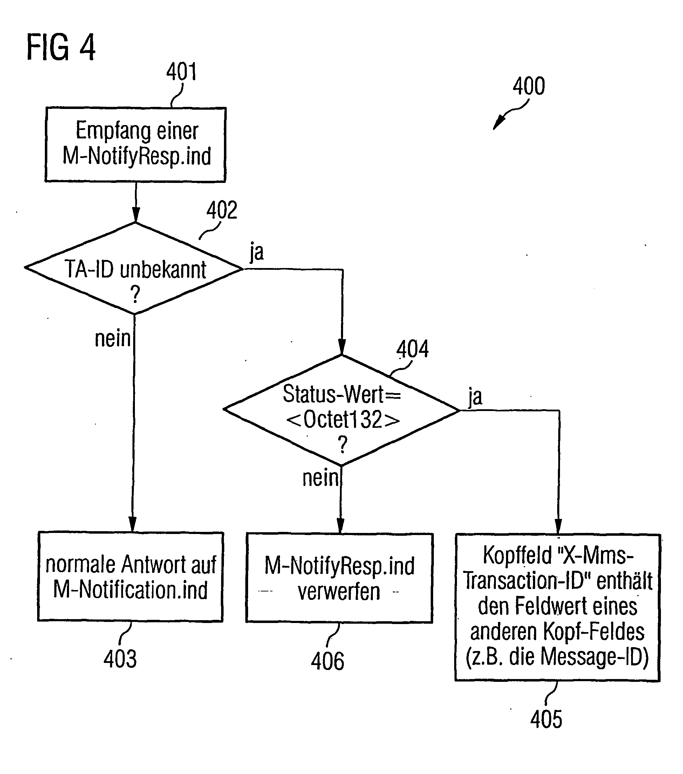

Fig.4 zeigt in einem Ablaufdiagramm 400 die einzelnen Schritte einer softwarebasierten Implementierung des ersten Ausführungsbeispiels in der zweiten MMS-Relay/Servereinheit B 103, 203.

Auf den Empfang einer M-NotifyResp.ind-Nachricht, welche einer MM1_notification.RES-Nachricht 112 entspricht (Schritt 401), hin wird überprüft, ob die in der M-NotifyResp.ind-Nachricht enthaltene Transaktions-ID der zweiten MMS-Relay/Servereinheit B 103, 203 bekannt ist (Schritt 402).

Ist dies der Fall, so kann die zweite MMS Relay/Servereinheit B 103, 203 die empfangene M-NotifyResp.ind-Nachricht ohne weiteres verarbeiten und interpretiert diese somit als normale übliche Antwort und Bestätigung seitens des zweiten MMS-User-Agents B 104, 204 auf die von der zweiten MMS Relay/Servereinheit B 103, 203 gesendeten M-Notification.ind-Nachricht (entspricht der MM1_notification.REQ-Nachricht 111 als 3GPP Abstract Message). Dies ist in Fig.4 mittels des Blocks 403 symbolisiert.

Ist der zweiten MMS Relay/Servereinheit B 103, 203 die Transaktions-ID der empfangenen M-NotifyResp.ind-Nachricht jedoch unbekannt, so wird in einem nachfolgenden Prüfschritt 404 überprüft, ob der Status-Wert des Feldes des Transaktions-ID-Feldes gleich einem vorgegebenen Wert, gemäß diesem Ausführungsbeispiel dem Wert <Octet 132> entspricht.

Ist dies der Fall, so erkennt die zweite MMS Relay/Servereinheit B 103, 203, dass aufgrund des Status-Werts in dem Transaktions-ID-Feldes (das heißt in dem Kopffeld X-Mms-Transaktions-ID) dieses den Feldwert eines anderen Kopffeldes enthält, beispielsweise die Nachrichten-Identifikationsangabe (Nachrichten-ID) der einen Versionskonflikt hervorrufenden Protokollnachricht im Rahmen der Übertragung der Multimedianachricht 105 (in Fig.4 symbolisiert mit einem Block 405).

Ist in dem Prüfschritt 404 jedoch festgestellt worden, dass der Status-Wert dem vorgegebenen Wert nicht entspricht, so wird die empfangene M-NotifyResp.ind-Nachricht verworfen (Schritt 406).

Bei Bedarf kann auch die Reihenfolge der Prüfschritte 404 und 402 verändert werden, d.h. erst eine Überprüfung des Status-Wertes erfolgen und dann die Transaktions-ID überprüft werden.

In anderen Worten wird gemäß diesem Ausführungsbeispiel der Erfindung bei einem erkannten Versionskonflikt der erste MMS-User-Agent B 101, 102 als Reaktion auf eine empfangene M-Delivery.ind oder M-Read-Orig.ind Protokolldateneinheit die M-NotifyResp.ind PDU (entspricht der MM1_notification.RES-Nachricht 112) zurück an die erste MMS Relay/Servereinheit B 102, 202 senden.

Da weder die M-Delivery.ind PDU noch die M-Read-Orig.ind PDU das X-Mms-Transaktions-ID-Kopffeld beinhalten, kann ein standardkonformer MMS-User-Agent, das heißt ein MMS-User-Agent gemäß der MMS Version 1.0 als MMS-Basisversion des jeweiligen Multimedianachrichten-Dienstes kein eindeutig zuzuordnendes Transformations-Identifikationsmerkmal in das X-Mms-Transaktions-ID-Kopffeld der M-NotifyResp.ind PDU einfügen.

In Ergänzung des Standes der Technik wird somit gemäß diesem Ausführungsbeispiel der Erfindung anschaulich vorgesehen, dass in diesem Fall die in der empfangenen M-Delivery.ind PDU oder M.Read-Orig.ind PDU enthaltene Nachrichten-ID oder ein anderer Feldwert "zweckentfremdet" als Transaktions-Identifikationsmerkmal in das X-MMs-Transaktions-ID-Kopffeld der Antwort-Nachricht M-NotifyResp.ind PDU eingesetzt wird. Die erste MMS Relay/Servereinheit A 102, 202 wird ein unbekanntes Transaktions-Identifikationsmerkmal in dem X-Mms-Transaktions-ID-Kopffeld vorfinden (Schritt 402) und möglicherweise einen Fehler ausgeben. Um dies zu verhindern, ist in der ersten MMS Relay/Servereinheit A 102, 202 durch den binär codierten Status-Wert "Unrecognised" (<Octet 132>) in der M-NotifyResp.ind PDU angezeigt, dass sie statt des erwarteten eindeutigen Transaktions-Identifikationsmerkmals den Feldwert eines anderen Kopffeldes, wie beispielsweise die Nachrichten-ID oder die Absender-Adresse, im X-Mms-Transaktions-ID-Kopffeld der M-NotifyResp.ind PDU vorfinden wird.

Analog dazu ist auch in der zweiten MMS Relay/Servereinheit B 103, 203 bei einem erkannten Versionskonflikt als Reaktion vorgesehen, auf eine empfangene M-Read-Rec.ind. PDU ohne das X-Mms-Transaktions-ID-Kopffeld eine M-Send.conf PDU zurück an den zweiten MMS-User-Agent 104, 204 zu senden, wobei das X-Mms-Transaktions-ID-Kopffeld in der M-Send.conf PDU die Nachrichten-ID oder einen anderen Feldwert beinhaltet.

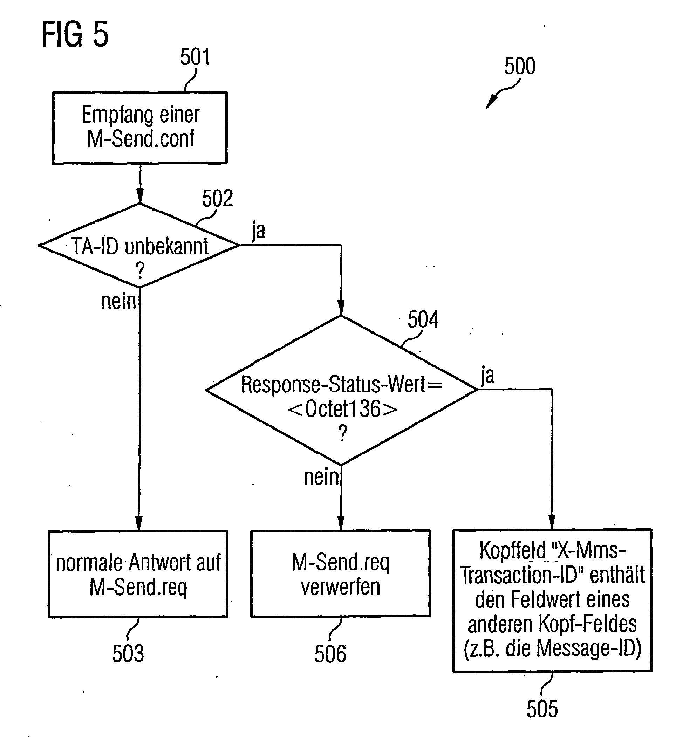

Der zweite MMS-User-Agent B 104, 204 wird nach Empfang einer M-Send.conf-Nachricht (Schritt 501 in dem Ablaufdiagramm 500 in Fig.5, welches eine softwarebasierte Implementierung des Versionskonfliktes gemäß diesem Ausführungsbeispiel der Erfindung auf Seite eines MMS-User-Agents beschreibt) beim Auswerten der von der zweiten MMS Relay/Servereinheit B 103, 203 zurückgeschickten M-Send.conf PDU ein ihm unbekanntes Transaktions-Identifikationsmerkmal im X-Mms-Transaktions-ID-Kopffeld vorfinden (erkannt in einem Prüfschritt 502) und möglicherweise einen Fehler ausgeben.

Um dies zu verhindern, soll dem zweiten MMS-User-Agent B 104, 204 analog zum oben beschriebenen Fall gemäß diesem Ausführungsbeispiel der Erfindung durch den binär codierten Antwort-Status-Wert "Error-unsupported-message" (<Octet 136>) in der M-Send.conf PDU angezeigt werden, dass er statt des erwarteten eindeutigen Transaktions-Identifikations-Merkmals den Feldwert eines anderen Kopffeldes, wie beispielsweise die Nachrichten-ID oder die Absender-Adresse, im X-Mms-Transaktions-ID-Kopffeld der M-Send.conf PDU vorfinden wird.

In Fig.5 ist der oben allgemein beschriebene Ablauf im Detail noch einmal dargestellt, wobei das Ergebnis des ersten Prüfschrittes 502 für den Fall, dass dem zweiten MMS-User-Agent B 104, 204 das Transaktions-Identifikationsmerkmal bekannt ist, der Empfang der M-Send.conf-Nachricht als normale Antwort auf die von dem zweiten MMS-User-Agent B 104, 204 an die zweite MMS Relay/Servereinheit B 103, 203 gesendete M-Send.req-Nachricht interpretiert wird (Block 503).

Ist jedoch dem zweiten MMS-User-Agent B 104, 204 das Transaktions-Identifikationsmerkmal in dem X-Mms-Transaktions-ID-Kopffeld der M-Send.conf-Nachricht unbekannt, so wird in einem nachfolgenden Prüfschritt (Schritt 504) geprüft, ob der Wert in dem X-Mms-Transaktions-ID-Kopffeld einem vorgebbaren Antwort-Status-Wert entspricht, gemäß diesem Ausführungsbeispiel dem Wert <Octet 136>.

Ist dies der Fall, so erkennt der zweite MMS-User-Agent B 104, 204, dass das Kopffeld X-Mms-Transaktions-ID den Feldwert eines anderen Kopffeldes enthält, beispielsweise die Nachrichten-ID oder die Adresse des die jeweilige Nachricht sendenden Kommunikationsteilnehmers (symbolisiert durch Block 505).

Weist der Wert in dem X-Mms-Transaktions-ID-Kopffeld nicht den Wert <Octet 136> auf, so wird die empfangene M-Send.req-Nachricht verworfen (Schritt 506).

Bei Bedarf kann auch die Reihenfolge der Prüfschritte 502 und 504 verändert werden, d.h. erst eine Überprüfung des Status-Wertes erfolgen und dann die Transaktions-ID überprüft werden.

Gemäß einem zweiten Ausführungsbeispiel der Erfindung ist es vorgesehen, das Kopffeld "X-Mms-Transaktions-ID" zur Angabe eines später eindeutig zuzuordnenden Transaktions-Identifikationsmerkmals in die M-Delivery.ind Protokolldateneinheit, die M-Acknowledge.ind Protokolldateneinheit, in die M-Read-Rec.ind Protokolldateneinheit und in die M-Read-Orig.ind Protokolldateneinheit einzuführen, allgemein im Bedarfsfall für jede Protokolldateneinheit, in welcher das Kopffeld "X-Mms-Transaktions-ID" in einer älteren MMS-Version, beispielsweise in der MMS-Basisversion, noch nicht enthalten ist.

Die Vorgehensweise gemäß dem zweiten Ausführungsbeispiel der Erfindung hat gegenüber dem ersten Ausführungsbeispiel der Erfindung insbesondere den Vorteil, dass in diesem Fall keine Feldwerte aus anderen Kopffeldern "zweckentfremdet" eingesetzt werden müssen.

Auch unterliegt das zweite Ausführungsbeispiel der Erfindung nicht dem möglichen Nachteil der ersten Ausführungsform, dass die empfangene MMS-Einheit unter Umständen nicht in der Lage ist, einen geeigneten Feldwert in das X-Mms-Transaktions-ID-Kopffeld einzutragen, weil die empfangende MMS-Einheit möglicherweise die empfangene Nachricht aufgrund eines Versionskonflikts nicht komplett erfassen, das heißt anschaulich "parsen" kann, so dass beispielsweise die Nachrichten-ID nicht aus dieser Nachricht extrahiert werden kann.

Anders ausgedrückt bedeutet dies für das zweite Ausführungsbeispiel der Erfindung, dass zum Gewährleisten, dass der erste MMS-User-Agent A 101, 201 bei einem erkannten Versionskonflikt als Reaktion auf eine empfangene M-Delivery.ind PDU oder eine empfangene M-Read-Orig.ind PDU ein eindeutig zuzuordnendes Transaktions-Identifikationsmerkmal in der M-NotifyResp.ind PDU an die erste MMS Relay/Servereinheit A 102, 202 zurückschicken kann, vorgesehen ist, das X-MMS-Transaktions-ID-Kopffeld auch in die M-Delivery.ind PDU und in die M-Read-Orig.ind PDU einzufügen. Auf diese Weise kann die erste MMS Relay/Servereinheit 102, 202 auf einfache Weise erkennen, welche der von ihr ausgelösten Transaktionen in dem ersten MMS-User-Agent A 101, 201 einen Versionskonflikt ausgelöst hat.

Analog dazu ist vorgesehen, das X-Mms-Transaktions-ID-Kopffeld für das eindeutig zuzuordnende Transaktions-Identifikationsmerkmal auch in die M-Read-Rec.ind PDU einzufügen, damit die zweite MMS Relay/Servereinheit B 103, 203 bei einem erkannten Versionskonflikt auch als Reaktion auf eine empfangene M-Read-Rec.ind PDU eine M-Send.conf PDU mit einem eindeutig zuzuordnenden Transaktions-Identifikationsmerkmal an den zweiten MMS-User-Agent B 104, 204 zurückschicken kann.

Details hierzu sind in den folgenden Tabellen 3 bis 8 angegeben, wobei auf das in [2] und in [3] übliche Format (in englischer Sprache) zurückgegriffen wurde.

Die Tabellen 3 bis 5 zeigen die gemäß diesem Ausführungsbeispiel der Erfindung vorgesehenen Erweiterungen in den betroffenen 3GPP Abstract Messages. Die gemäß diesem Ausführungsbeispiel der Erfindung ergänzten Kopffelder sind in diesem Fall mit einem fettgedruckten Rahmen hervorgehoben.

**Tabelle 3: Informationselemente in der MM1_delivery_report.REQ.**

| **Informations element** | **Präsenz** | **Beschreibung** |
|---|---|---|
| Nachrichtentyp | Obligatorisch | Identifiziert diese Nachricht als MM1 delivery report.REQ. |
| Transaktions-ID | Obligatorisch | Die Identifikation der MM1_delivery_report.REQ-Transaktion. |
| MMS Version | Obligatorisch | Identifiziert die Version der Schnittstelle, die von dem MMS Relay/Server unterstützt wird. |
| Nachrichten-ID | Obligatorisch | Die Identifikation der ursprünglichen MM. |
| Empfänger-Adresse | Obligatorisch | Die Adresse des MM-Empfängers der ursprünglichen MM. |
| Datum und Zeit | Obligatorisch | Datum und Zeit zu dem/der die MM verarbeitet wurde (abgeholt, abgelaufen, zurückgewiesen, etc.) (Zeitstempel) |
| MM Status | Obligatorisch | Status der MM, z.B. abgeholt, weitergeleitet, abgelaufen, zurückgewiesen |
| MM Statustext | Optional | Textbeschreibung des Status zu Anzeigezwecken, sollte den MM Status näher bestimmen |
| Applik-ID | Optional | Die Identifikation der Applikation für die dieser Lieferbericht vorgesehen ist. |
| Antwort-Applik-ID | Optional | Identifikation eines "Antwortpfads" zu diesem Lieferbericht. |
| Aux-Applik-Info | Optional | Hilfsapplikationaddressierungs-information wie in der ursprünglichen MM angegeben. |

**Tabelle 4: Informationselemente in der MM1_read_reply_recipient.REQ.**

| **Informations element** | **Präsenz** | **Beschreibung** |
|---|---|---|
| Nachrichtentyp | Obligatorisch | Identifiziert diese Nachricht als MM1_read_reply_recipient.REQ. |
| Transaktions-ID | Obligatorisch | Die Identifikation der MM1_read_reply_recipient.REQ-Transaktion. |
| MMS Version | Obligatorisch | Identifiziert die Version der Schnittstelle, die von dem MMS User Agent unterstützt wird. |
| Empfänger-Adresse | Obligatorisch | Die Adresse des MM-Empfängers der ursprünglichen MM, d.h. des Absenders des Lese-Antwort-Berichts. |
| Absender-Adresse | Obligatorisch | Die Adresse des MM-Absenders der ursprünglichen MM, d.h. des Empfängers des Lese-Antwort-Berichts. |
| Nachrichten-ID | Obligatorisch | Die Nachrichten-ID der ursprünglichen MM. |
| Datum und Zeit | Optional | Datum und Zeit zu dem/der die MM verarbeitet wurde (abgeholt, abgelaufen, zurückgewiesen, etc.) (Zeitstempel) |
| Lese-Status | Obligatorisch | Status der MM, z.B. Gelesen, Gelöscht ohne gelesen worden zu sein |
| Applik-ID | Optional | Die Identifikation der Applikation für die der Lese-Antwort-Bericht vorgesehen ist. |
| Antwort-Applik-ID | Optional | Die Identifikation eines "Antwortpfads" zu diesem Lese-Antwort-Bericht. |
| Aux-Applik-Info | Optional | Hilfsapplikationsadressierungs-information. |

**Tabelle 5: Informationselemente in der MM1_read_reply_originator.REQ.**

| **Informations element** | **Präsenz** | **Beschreibung** |
|---|---|---|
| Nachrichtentyp | Obligatorisch | Identifiziert diese Nachricht als MM1_read_reply_originator.REQ. |
| Transaktions-ID | Obligatorisch | Die Identifikation dieser MM1_read_reply_originator.REQ-Transaktion. |
| MMS Version | Obligatorisch | Identifiziert die Version der Schnittstelle, die von dem MMS Relay/Server unterstützt wird. |
| Empfänger-Adresse | Obligatorisch | Die Adresse des MM-Empfängers der ursprünglichen MM, d.h. des Absenders des Lese-Antwort-Berichts. |
| Absender-Adresse | Obligatorisch | Die Adresse des MM-Absenders der ursprünglichen MM, d.h. des Empfängers des Lese-Antwort-Berichts. |
| Nachrichten-ID | Obligatorisch | Die Nachrichten-ID der ursprünglichen MM. |
| Datum und Zeit | Obligatorisch | Datum und Zeit zu dem/der die MM verarbeitet wurde (abgeholt, abgelaufen, zurückgewiesen, etc.) (Zeitstempel) |
| Lese-Status | Obligatorisch | Status der MM, z.B. Gelesen, Gelöscht ohne gelesen worden zu sein |
| Applik-ID | Optional | Die Identifikation der Applikation, für die der Lese-Antwort-Bericht vorgesehen ist. |
| Antwort-Applik-ID | Optional | Die Identifikation eines "Antwort-Pfads" zu diesem Lese-Antwort-Bericht. |
| Aux-Applik-Info | Optional | Hilfsapplikationsadressierungs-information. |

Da für die (Luft-)Schnittstelle MM1 206, 209 wie oben beschrieben zu jeder 3GPP Abstract Message eine entsprechende OMA MMS PDU gehört, sind die oben beschriebenen Erweiterungen auch in den entsprechenden OMA MMS PDUs vorgesehen.

Die Tabellen 6 bis 8 zeigen die hierzu vorgesehenen Details. Auch in diesen Tabellen sind die gemäß dem zweiten Ausführungsbeispiel der Erfindung ergänzten Kopffelder mit einem fettgedruckten Rahmen hervorgehoben.

**Tabelle 6: Kopffelder der M-Delivery.ind-PDU**

| **Feldname** | **Feldwert** | **Beschreibung** |
|---|---|---|
| X-Mms- | Nachrichten- | Obligatorisch. |
| Nachrichten-Typ | Typ-Wert = m-delivery-ind | Spezifiziert den PDU-Typ. |
| X-Mms- | Transaktions | Obligatorisch. |
| Transaktions-ID | -id-Wert | Ein eindeutiger Identifikator für die Lieferbericht-Transaktion, der eine Verknüpfung zwischen der M-Delivery.ind-PDU und der entsprechenden M-Delivery-Resp.ind-PDU oder (im Falle eines Versionskonflikts) der entsprechenden M-NotifyResp.ind-PDU liefert. |
| X-Mms-MMS-Version | MMS-Versions-Wert | Obligatorisch. Die MMS-Versionnummer. Gemäß dieser Spezifikation ist die Version 1.2 |
| Nachrichten-ID | Nachrichten- | Obligatorisch. |
| | ID-Wert | Dies ist die Referenz, die ursprünglich von dem MMS-Proxy-Relay der MM zugewiesen wurde und in die entsprechende M-Send.conf- oder M-Forward.conf-PDU eingefügt wurde. |
| | | Diese ID ermöglicht es einem MMS-Client, Lieferberichte mit zuvor gesendeten oder weitergeleiteten MMs abzustimmen. |
| To | To-Wert | Obligatorisch. Erforderlich zum Berichten im Falle einer Punkt-zu-Mehrpunkt-Nachricht. |
| Datum | Datums-Wert | Obligatorisch. Datum und Zeit zu dem/der die MM von dem Empfänger oder MMS-Proxy-Relay verarbeitet wurde (abgeholt, abgelaufen, zurückgewiesen, etc.). |
| X-Mms-Status | Status-Wert | Obligatorisch. Der Status der Nachricht. |

**Tabelle 7: Kopffelder der M-Read-Rec.ind-PDU**

| **Feldname** | **Felfwert** | **Beschreibung** |
|---|---|---|
| X-Mms- | m-read-rec- | Obligatorisch. |
| Nachrichten-Typ | ind | Identifiziert den PDU-Typ |
| X-Mms- | Transaktions | Obligatorisch. |
| Transaktions-ID | -id-Wert | Ein eindeutiger Identifikator für die Lese-Bericht-Transaktion, der eine Verknüpfung zwischen der M-Read-Rec.ind-PDU und der entsprechenden M-Read-Rec-Resp.ind-PDU oder (im Falle eines Versionskonflikts) der entsprechenden M-Send.conf-PDU liefert. |
| X-Mms-MMS- | MMS- | Obligatorisch. |
| Version | Versions-Wert | Die MMS-Versionsnummer. Gemäß dieser Spezifikation ist die Version 1.2 |
| Nachrichten-ID | Nachrichten- | Obligatorisch. |
| | ID-Wert | Dies ist die Referenz die ursprünglich von dem MMS-Proxy-Relay der MM zugewiesen wurde und in die entsprechende M-Retrieve.conf-PDU eingefügt wurde. |
| | | Diese ID ermöglicht es einem MMS-Client, Lese-Bericht-PDUs mit zuvor gesendeten oder weitergeleiteten MMs abzustimmen. |
| An | An-Wert | Obligatorisch |
| | | Die Adresse des Empfängers des Leseberichts, d.h. des Absenders der ursprünglichen Multimedia-Nachricht. |
| Von | Von-Wert | Obligatorisch |
| | | Adresse des Senders des Leseberichts. Der sendende Client MUSS entweder seine Adresse senden oder ein Adress-Töken einfügen. Im Falle eines Tokens MUSS der MMS Proxy-Relay die korrekte Adresse des Senders einfügen. |
| Datum | Datums-Wert | Optional |
| | | Zeit, zu der die Nachricht vom empfangenden MMS-Client verarbeitet wurde. Der Empfänger- MMS Proxy-Relay SOLL dieses Feld erzeugen, wenn es nicht von dem Empfänger-MMS-Client bereitgestellt wird. |
| X-Mms-Lese-Status | Lese-status-Wert | Obligatorisch Der Status der Nachricht. |

**Tabelle 8: Kopffelder der M-Lese-Orig.ind-PDU**

| **Feldname** | **Felwert** | **Beschreibung** |
|---|---|---|
| X-Mms- | m-read-orig- | Obligatorisch. |
| Nachrichten-Typ | ind | Identifiziert den PDU-Typ |
| X-Mms- | Transaktions | Obligatorisch. |
| Transaktions-ID | -id-Wert | Ein eindeutiger Identifikator für die Lesebericht-Transaktion, der eine Verknüpfung zwischen der M-Read-Orig.ind-PDU und der entsprechenden M-Read-Orig-Resp.ind-PDU oder (im Falle eines Versionskonflikts) der entsprechenden M-NotifyResp.ind-PDU bereitstellt. |
| X-Mms-MMS- | MMS- | Obligatorisch. |
| Version | Versions-Wert | Die MMS-Versionsnummer. Gemäß dieser Spezifikation ist die Version 1.2 |
| Nachrichten-ID | Nachrichten- | Obligatorisch. |
| | ID-Wert | Dies ist die Referenz, die ursprünglich der MM von dem MMS Proxy-Relay zugewiesen wurde und in die entsprechende M-Send.conf- oder M-Forward.conf-PDU eingefügt wurde. |
| | | Diese ID ermöglicht es einem MMS-Client, Leseberichts-PDUs mit zuvor gesendeten oder weitergeleiteten MMs abzugleichen. |
| An | An-Wert | Obligatorisch |
| | | Die Adresse des Empfängers des Leseberichts, d.h. des Absenders der ursprünglichen Multimedia-Nachricht. |
| Von | Von-Wert | Obligatorisch |
| | | Die Adresse des Absenders des Leseberichts, d.h. des Empfängers der ursprünglichen Multimedia-Nachricht. |
| | | Das Einfüge-Adress-Token DARF NICHT als der Wert des Feldes verwendet werden. |
| Datum | Datums-Wert | Obligatorisch Zeit zu der die Nachricht von dem Empfänger-MMS-Client verarbeitet wurde. |
| X-Mms-Lese-Status | Lese-status-Wert | Obligatorisch Der Status der Nachricht. |

Gemäß diesem Ausführungsbeispiel der Erfindung trägt das in der M-Delivery.ind PDU, in der M-Lese-Orig.ind PDU und in der M-Lese-Orig.ind PDU eingeführte Kopffeld "X-Mms-Transaktions-ID" die hexadezimale Kopffeldcodierung "0x18" (dezimal: 24) und sein Feldwert ist als Text-String codiert gemäß folgender Vorschrift:
**X-Mms-Transaktions-ID field**
Transaktions-ID-Wert = Text String

Auf diese Weise ist die Protokollerweiterung gemäß diesem Ausführungsbeispiel der Erfindung standardkonform mit dem in [3] beschriebenen Kommunikationsstandard.

Gemäß einem dritten Ausführungsbeispiel der Erfindung ist es vorgesehen, auch zu den 3GPP Abstract Messages MM1_delivery_report.REQ 118, MM1_acknowledgement.REQ 115, MM1_read_reply_receipient.REQ 119 und MM1_read_reply_originator.REQ 122 bzw. den entsprechenden OMA MMS PDUs M-Delivery.ind, M-Acknowledge.ind, M-Read-Rec.ind und M-Read-Orig.ind jeweils eine entsprechende Antwort-Protokolldateneinheit ("Response")-PDU für die jeweilige Rückmeldung zu definieren, wodurch jeweils ein Anforderungsnachricht-/Antwortnachricht-Paar (Request/Response Paar) gebildet wird.

Das dritte Ausführungsbeispiel der Erfindung baut auf dem zweiten Ausführungsbeispiel der Erfindung insofern auf, da hierbei die Anwesenheit von X-Mms-Transaktions-ID-Kopffeldern in allen Protokolldateneinheiten vorgesehen ist.

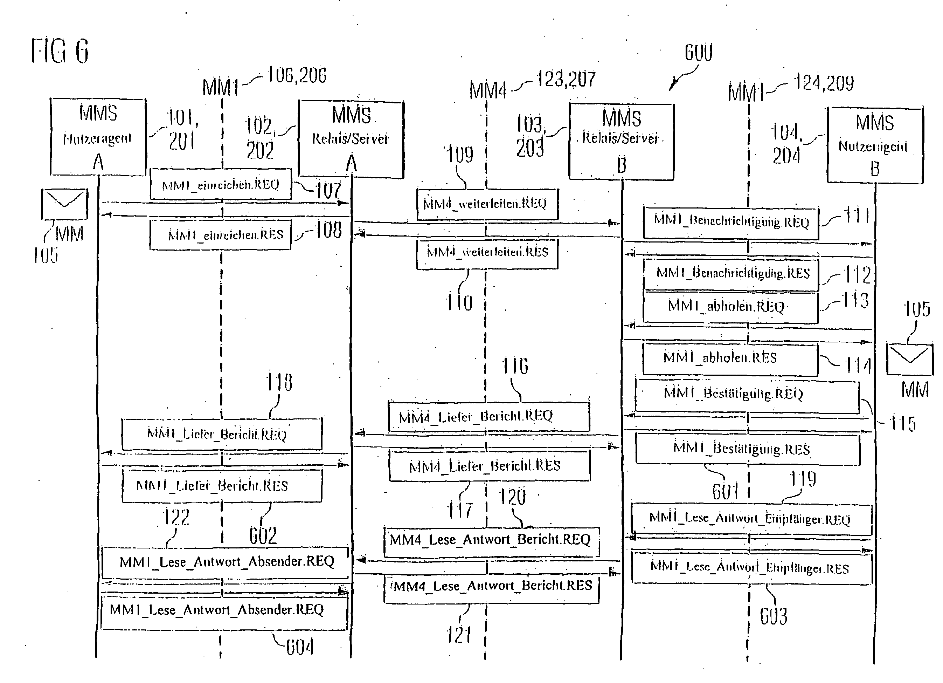

**Fig. 6** zeigt in einem Nachrichtenflussdiagramm 600 die gegenüber Fig.1 zusätzlich vorgesehenen Protokollnachrichten.

Zur Vermeidung von Wiederholungen werden im Folgenden lediglich die gegenüber dem Verfahren, welches im Rahmen von Fig.1 dargelegt wurde, zusätzlich vorgesehenen Nachrichten beschrieben.

Ergänzend zu dem Vorgehen gemäß Fig.1 ist vorgesehen, dass die zweite MMS Relay/Servereinheit B 103, 203 auf den Empfang der MM1_acknowledgement.REQ-Nachricht 115 eine MM1_acknowledgement.RES-Nachricht 601 erzeugt und an den zweiten MMS-User-Agent B 104, 204 als Bestätigung des korrekten Empfang der MM1_acknowledgement.REQ-Nachricht 115 sendet. Gemäß diesem Ausführungsbeispiel der Erfindung weisen die MM1_acknowledgement.REQ-Nachricht 115 und die MM1_acknowledgement.RES-Nachricht 601 die gleiche X-Mms-Transaktions-ID auf.

Ferner ist gemäß diesem Ausführungsbeispiel der Erfindung vorgesehen, dass der erste MMS-User-Agent A 101, 201 auf den Empfang der MM1_delivery_report.REQ-Nachricht 118 eine den korrekten Empfang dieser Nachricht bestätigende MM1_delivery_report.RES-Nachricht 602 erzeugt und an die erste MMS Relay/Servereinheit A 102, 202 übermittelt. Gemäß diesem Ausführungsbeispiel der Erfindung weisen die MM1_delivery_report.REQ-Nachricht 118 und die MM1_delivery_report.RES-Nachricht 602 die gleiche X-Mms-Transaktions-ID auf.

Weiterhin ist gemäß diesem Ausführungsbeispiel der Erfindung vorgesehen, dass die zweite MMS Relay/Servereinheit B 103, 203 auf den Empfang der MM1_read_reply_recipient.REQ-Nachricht 119 von dem zweiten MMS-User-Agent B 104, 204 hin eine den korrekten Empfang dieser Nachricht bestätigende MM1_read_reply_recipient.RES-Nachricht 603 erzeugt und an den zweiten MMS-User-Agent B 104, 204 übermittelt. Gemäß diesem Ausführungsbeispiel der Erfindung weisen die MM1_read_reply_recipient.REQ-Nachricht 119 und die MM1_read_reply_recipient.RES-Nachricht 603 die gleiche X-Mms-Transaktions-ID auf.

Schließlich ist als Protokollerweiterung gemäß dem dritten Ausführungsbeispiel der Erfindung vorgesehen, dass der erste MMS-User-Agent A 101, 201 auf den korrekten Empfang der MM1_read_reply_originiator.REQ-Nachricht 122 hin eine den korrekten Empfang dieser Nachricht bestätigende MM1_read_reply_originator.RES-Nachricht 604 erzeugt und diese an die erste MMS Reläy/Servereinheit A 102, 202 übermittelt. Gemäß diesem Ausführungsbeispiel der Erfindung weisen die MM1_read_reply_originiator.REQ-Nachricht 122 und die MM1_read_reply_originator.RES-Nachricht 604 die gleiche X-Mms-Transaktions-ID auf.

In diesem Zusammenhang ist erneut darauf hinzuweisen, dass für die oben beschriebenen neuen 3GPP Abstract Messages entsprechend auch neue OMA MMS PDUs vorgesehen sind.

Die detaillierte Beschreibung des Aufbaus der einzelnen 3GPP Abstract Messages und der dazugehörigen OMA MMS PDUs ist den folgenden Tabellen 9 bis 12 bzw. 13 bis 16 zu entnehmen.

**Tabelle 9: Informationselemente in dem MM1_delivery_report.RES.**

| **Informations element** | **Präsenz** | **Beschreibung** |
|---|---|---|
| Nachrichtentyp | Obligatorisch | Identifiziert die Nachricht als MM1_delivery_report.RES. |
| Transaktions-ID | Obligatorisch | Die Identifikation des MM1_delivery_report.REQ/ MM1 delivery report.RES-Paares. |
| MMS Version | Obligatorisch | Identifiziert die Version der Schnittstelle, die von dem MMS-User-Agent unterstützt wird. |
| Status | Obligatorisch | Der Status des Lieferberichts |
| Statustext | Optional | Ein erläutender Text entsprechend dem Status, falls vorhanden |

**Tabelle 10: Informationselemente in dem MM1_acknowledgement.RES.**

| **Informations element** | **Präsenz** | **Beschreibung** |
|---|---|---|
| Nachrichtentyp | Obligatorisch | Identifziert die Nachricht als MM1 acknowledgement.RES. |
| Transaktions-ID | Obligatorisch | Die Identifikation des MM1_acknowledgement.REQ/ MM1 acknowledgement.RES-Paares. |
| MMS Version | Obligatorisch | Identifiziert die Version der Schnittstelle, die von dem MMS User Agent unterstützt wird. |
| Status | Obligatorisch | Der Status der Benutzerbestätigung |
| Statustext | Optional | Ein erläuternder Text entsprechend dem Status, falls vorhanden |

**Tabelle 11: Informations elements in dem MM1_read_reply_recipient.RES.**

| **Informations element** | **Präsenz** | **Beschreibung** |
|---|---|---|
| Nachrichtentyp | Obligatorisch | Identifziert die Nachricht als MM1 read reply recipient.RES. |
| Transaktions-ID | Obligatorisch | Die Identifikation des MM1_read_reply_recipient.REQ/ MM1_read_reply_recipient.RES-Paares. |
| MMS Version | Obligatorisch | Identifiziert die Version der Schnittstelle, die von dem MMS Relay/Server unterstützt wird. |
| Status | Obligatorisch | Der Status des Leseberichts |
| Statustext | Optional | Ein erläuternder Text entsprechend dem Status, falls vorhanden |

**Tabelle 12: Informationselemente in dem MM1_read_reply_originator.RES.**

| **Informations element** | **Präsenz** | **Beschreibung** |
|---|---|---|
| Nachrichtentyp | Obligatorisch | Identifiziert diese Nachricht als MM1 read reply originator.RES. |
| Transaktions-ID | Obligatorisch | Die Identifikation des MM1_read_reply_originator.REQ/ MM1_read_reply_originator.RES-Paares. |
| MMS Version | Obligatorisch | Identifiziert die Version der Schnittstelle, die von dem MMS User Agent unterstützt wird. |
| Status | Obligatorisch | Der Status des Leseberichts |
| Statustext | Optional | Ein erläuternder Text entsprechend dem Status, falls vorhanden |

**Tabelle 13: Kopffelder der M-Delivery.conf-PDU**

| **Feldname** | **Feldwert** | **Beschreibung** |
|---|---|---|
| X-Mms- | Nachrichten- | Obligatorisch. |
| Nachrichten-Typ | Typ-Wert = m-delivery-conf | Spezifziert den PDU-Typ. |
| X-Mms- | Transaktions | Obligatorisch. |
| Transaktions-ID | -id-Wert | Identifziert die durch die M-Delivery.ind-PDU gestartete Transaktion |
| X-Mms-MMS- | MMS- | Obligatorisch. |
| Version | Versions-Wert | Die MMS-Versionsnummer. |
| X-Mms-Antwort- | Antwort- | Obligatorisch. |
| Status | status-Wert | Lieferberichtsstatus. Der Antwortstatus OK SOLL nach erfolgreicher Abfrage des Leseberichts verwendet werden. |
| X-Mms-Antwort- | Antwort- | Optional. |
| Text | text-Wert | Beschreibung die den Antwort-status-Wert näher bestimmt. |

**Tabelle 14: Kopffelder der M-Acknowledge.conf-PDU**

| **Feldname** | **Feldwert** | **Beschreibung** |
|---|---|---|
| X-Mms- | Nachrichten- | Obligatorisch. |
| Nachrichten-Typ | Typ-Wert = m-acknowledge-conf | Spezifiziert den PDU-Typ. |
| X-Mms- | Transaktions | Obligatorisch. |
| Transaktions-ID | -id-Wert | Identifiziert die durch die M-Acknowledge.ind-PDU gestartete Transaktion. |
| X-Mms-MMS- | MMS- | Obligatorisch. |
| Version | Versions-Wert | Die MMS-Versionsnummer. |
| X-Mms-Antwort- | Antwort- | Obligatorisch. |
| Status | status-Wert | Bestätigungsstatus. Der Antwortstatus OK SOLL nach einer erfolgreichen Zustellung der Bestätigung verwendet werden. |
| X-Mms-Antwort- | Antwort- | Optional. |
| Text | text-Wert | Beschreibung, die den Antwort-status-Wert näher bestimmt. |

**Tabelle 15: Kopffelder der M-Read-Rec.conf PDU**

| **Feldname** | **Feldwert** | **Beschreibung** |
|---|---|---|
| X-Mms- | Nachrichten- | Obligatorisch. |
| Nachrichten-Typ | Typ-Wert = m-read-rec-conf | Spezifziert den PDU-Typ. |
| X-Mms- | Transaktions | Obligatorisch. |
| Transaktions-ID | -id-Wert | Identifziert die durch die M-Delivery.ind-PDU gestartete Transaktion. |
| X-Mms-MMS- | MMS- | Obligatorisch. |
| Version | Versions-Wert | Die MMS-Versionsnummer. |
| X-Mms-Antwort- | Antwort- | Obligatorisch. |
| Status | status-Wert | Leseberichtsstatus. Der Antwortstatus OK SOLL nach einer erfolgreichen Zustellung des Leseberichts verwendet werden. |
| X-Mms-Antwort- | Antwort- | Optional. |
| Text | text-Wert | Beschreibung, die den Antwort-Status-Wert näher bestimmt. |

**Tabelle 16: Kopffelder der M-Read-Orig.conf-PDU**

| **Feldname** | **Feldwert** | **Beschreibung** |
|---|---|---|
| X-Mms- | Nachrichten- | Obligatorisch. |
| Nachrichten-Typ | Typ-Wert = m-read-orig-conf | Spezifziert den PDU-Typ. |
| X-Mms- | Transaktions | Obligatorisch. |
| Transaktions-ID | -id-Wert | Identifziert die durch die M-Delivery.ind-PDU gestartete Transaktion. |
| X-Mms-MMS- | MMS- | Obligatorisch. |
| Version | Versions-Wert | Die MMS-Versionsnummer. |
| X-Mms-Antwort- | Antwort- | Obligatorisch. |
| Status | status-Wert | Leseberichtsstatus. Der Antwortstatus OK SOLL nach einer erfolgreichen Zustellung des Lieferberichts verwendet werden. |
| X-Mms-Antwort- | Antwort- | Optional. |
| Text | text-Wert | Beschreibung, die den Antwort-Status-Wert näher bestimmt. |

Zusammenfassend bedeutet die Vorgehensweise gemäß dem dritten Ausführungsbeispiel der Erfindung, dass für die Protokolldateneinheiten M-Delivery.ind, M-Acknowledge.ind, M-Read-Rec.ind und M-Read-Orig.ind und die zugehörigen Abstract Messages entsprechende Bestätigungsnachrichten (anschaulich: "Response"-Protokolldateneinheiten) eingeführt werden, womit jeweilige Request/Response-Nachrichten-Paare gebildet werden.

Insbesondere durch diese Vorgesehenweise und auch durch die Vorgehensweise gemäß dem vierten Ausführungsbeispiel der Erfindung, wie sie im Folgenden noch näher erläutert wird, wird das Problem des theoretisch endlosen Bereithaltens von Auslieferungsberichten oder Lesebestätigungen durch den ersten MMS-Dienstleistungsanbieter in seinem MMSE A für ein einwandfrei funktionierendes MMS-Dienst-Verhalten auf sehr einfache Weise gelöst.

Gemäß einem vierten Ausführungsbeispiel der Erfindung ist es vorgesehen, eine neue OMA MMS Protokolldateneinheit einzuführen als eine Bestätigungsnachricht (im Folgenden auch bezeichnet als "Response"-Protokolldateneinheit), mit welcher eine empfangende MMS-Einheit im Falle eines erkannten Versionskonfliktes diejenigen OMA MMS PDUs, die von der empfangenden MMS-Einheit nicht verstanden werden und kein Transaktionsmerkmal aufweisen, also zum Beispiel die OMA MMS PDUs M-Delivery.ind, M-Acknowledge.ind, M-Read-Rec.ind oder M-Read-Orig.ind, an die sendende MMS-Einheit zurückschicken kann.

Die im Folgenden noch näher erläuterte Vorgehensweise gemäß dem vierten Ausführungsbeispiel der Erfindung ist verglichen mit den oben beschriebenen anderen drei Ausführungsbeispielen vorteilhaft, da
- keine Feldwerte aus anderen Kopffeldern zweckentfremdet eingesetzt werden wie gemäß dem ersten Ausführungsbeispiel der Erfindung,
- die Existenz von Transaktions-Identifikationsmerkmalen nicht vorgesehen ist, wie sie beispielsweise gemäß dem zweiten Ausführungsbeispiel der Erfindung oder dem dritten Ausführungsbeispiel der Erfindung vorgesehen sind, und
- der Transaktionsfluss (Transaction Flow) gemäß dem Stand der Technik nur geringfügig erweitert wird.

Ein zusätzlicher Vorteil der Vorgehensweise gemäß dem vierten Ausführungsbeispiel ist, dass die MMS Relay/Servereinheit mit der Rücksendung der Nachricht, die zum Versionskonflikt geführt hat, keine speziellen Daten zu den Nachrichten über das bisher Standardisierte hinaus speichern muss.

Im Detail zielt die Vorgehensweise gemäß dem vierten Ausführungsbeispiel der Erfindung darauf ab, eine neue 3GPP Abstract Message bzw. eine zugehörige neue OMA MMS PDU als "Response"-PDU für eine Rückmeldung zu definieren, welche die ursprünglich von der entsprechenden MMS-Einheit empfangene, aufgrund eines Versionskonflikts aber nicht erkannte 3GPP Abstract Message bzw. OMA MMS PDU umfasst.

Bei dieser Ausführungsform brauchen, wie oben beschreiben, keine Feldwerte aus anderen Kopffeldern "zweckentfremdet" eingesetzt und der MMS Transaktionsfluss muss nur geringfügig erweitert werden. Ferner ist die Existenz von eindeutig zuzuordnenden Transformations-Identifikationsmerkmalen nicht zwingend erforderlich, jedoch optional wenn gewünscht möglich, so dass die 3GPP Abstract Messages MM1_delivery_report.REQ, MM1_acknowledgement.REQ, MM1_read_reply_recipient.REQ und MM1_read_reply_originator.REQ bzw. die zugehörigen OMA MMS PDUs M-Delivery.ind, M-Acknowledge.ind, M-Read-Rec.ind und M-Read-Orig.ind gemäß diesem Ausführungsbeispiel der Erfindung nicht verändert werden müssen.

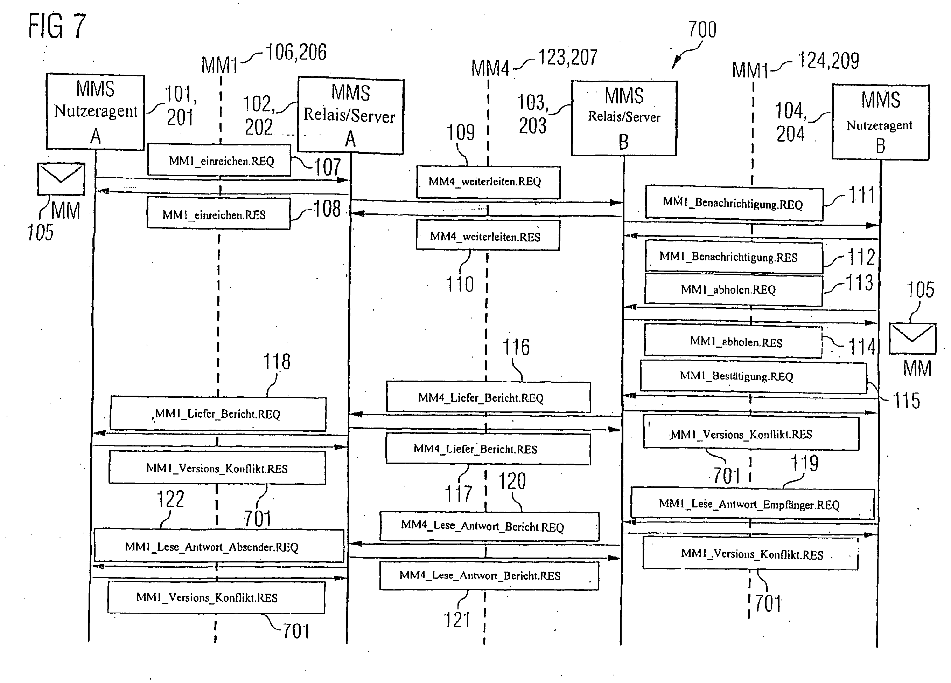

**Fig.7** zeigt in einem Nachrichtenflussdiagramm 700 den gemäß diesem Ausführungsbeispiel der Erfindung geänderten Nachrichtenfluss gemäß 3GPP, wobei, im Gegensatz zu dem Nachrichtenfluss gemäß Fig.6, das heißt gemäß dem dritten Ausführungsbeispiel der Erfindung, in diesem Fall nur mögliche Zeitpunkte zum Aussenden der jeweiligen MM1_version_conflict.RES-Nachricht 701 gezeigt werden.

Dies bedeutet, dass beispielsweise nicht jedes Mal nach einer MM1_acknowledgement.REQ-Nachricht 115 eine MM1_version-conflict.RES-Nachricht 701 folgen soll, sondern gemäß diesem Ausführungsbeispiel der Erfindung nur in den Fällen, in denen die zweite MMS Relay/Servereinheit B 103, 203 eine zuvor von dem zweiten MMS-User-Agent B 104, 204 ausgesendete MM1_acknowledgement.REQ-Nachricht 115 aufgrund eines Versionskonfliktes nicht erkannt hat. Gleiches gilt für die anderen Transaktionspaare, beispielsweise wenn der erste MMS-User-Agent A 101, 201 eine von der ersten MMS Relay/Servereinheit A 102, 202 ausgesendete 3GPP Abstract Message bzw. eine OMA MMS PDU aufgrund eines Versionskonfliktes nicht erkannt hat.

Wird ein Versionskonflikt von dem jeweiligen MMS-User-Agent bzw. von der MMS Relay/Servereinheit erkannt, wird gemäß diesem Ausführungsbeispiel der Erfindung die von der MMS Relay/Servereinheit bzw. dem MMS-User-Agent gesendete Nachricht innerhalb der MM1_version_conflict.RES-Nachricht 701 wieder an die MMS Relay/Servereinheit bzw. den MMS-User-Agent zurückgeschickt.

Mit dieser in der jeweiligen MM1_version_conflict.RES-Nachricht 701 eingebetteten ursprünglichen Nachricht (OMA MMS PDU), die zu dem Versionskonflikt geführt hat, kann die MMS Relay/Servereinheit bzw. der MMS-User-Agent eine entsprechende Nachricht codiert mit einer geeigneteren MMS Version (beispielsweise der Basisversion MMS Version 1.0) generieren und diese dem MMS-User-Agent bzw. der MMS Relay/Servereinheit schicken.

Der Inhalts-Typ der OMA MMS PDU soll gemäß [3] "Applikation/wap.vnd.mms-message" sein. Die detaillierte Beschreibung des Aufbaus der gemäß dem vierten Ausführungsbeispiel der Erfindung neu definierten 3GPP Abstract Message MM1_version_conflict.RES-Nachricht 701 und der dazugehörigen OMA MMS PDU M-VersConflict.ind ist den folgenden Tabellen 17 und 18 zu entnehmen.

**Tabelle 17: Informationselemente in dem MM1_version_conflict.RES.**

| **Informations element** | **Präsenz** | **Beschreibung** |
|---|---|---|
| Nachrichtentyp | Obligatorisch | Identifziert die Nachricht als MM1 version conflict.RES. |
| MMS Version | Obligatorisch | Identifziert die Version der Schnittstelle, die von dem MMS User Agent unterstützt wird. |
| Status | Obligatorisch | Der Status der zuvor empfangenen MMS-PDU. |
| Statustext | Optional | Ein erläutender Text entsprechend dem Status, falls vorhanden. |
| Inhalts-Typ | Obligatorisch | Der Inhaltstyp des Anhangs. |
| Inhalt | Obligatorisch | Die abstrakte Nachricht, die den Versionskonflikt verursacht hat ist wie zuvor empfangen angehängt. |

**Tabelle 18: Kopffelder der M-VersConflict.ind PDU**

| **Feldname** | **Feldwert** | **Beschreibung** |
|---|---|---|
| X-Mms- | Nachrichten- | Obligatorisch. |
| Nachrichten-Typ | Typ-Wert = m-versconflict -ind | Spezifziert den PDU-Typ. |
| X-Mms-MMS- | MMS- | Obligatorisch. |
| Version | Versions-Wert | Die MMS-Versionsnummer. |
| X-Mms-Antwort- | Antwort- | Obligatorisch. |
| Status | status-Wert | PDU-Lieferstatus. Der Antwortstatus 'Error-unsupported-message' (<Octet 136>) SOLL nach einer nicht erfolgreichen PDU-Lieferung verwendet werden. |
| X-Mms-Antwort- | Antwort- | Optional. |
| Text | text-Wert | Beschreibung, die den Antwort-status-Wert näher bestimmt. |
| Inhalts-Typ | Inhalts-Typ- | Obligatorisch. |
| | Wert | Der Inhaltstyp 'application/wap.vnd.mms-message' der angehängten OMA-MMS-PDU. |
| Die OMA-MMS-PDU, die den Versionskonflikt verursacht hat, wird wie zuvor empfangen angehängt. | | |

Diejenige OMA MMS PDU, welche den Versionskonflikt verursacht hat, soll den in Tabelle 18 beschriebenen Kopffeldern unmittelbar folgen, so wie sie von der entsprechenden MMS-Einheit zuvor empfangen worden ist, ähnlich wie in der in [3] beschriebenen OMA MMS PDU namens M-Mbox-upload.REQ.

Zusammenfassend kann ein Aspekt der Erfindung darin gesehen werden, dass durch die Erfindung ein Verfahren zur Auflösung möglicher Versionskonflikte auf alle OMA MMS PDUs bereitgestellt wird.

Auf diese Weise lässt sich nunmehr ein fehlerfreies MMS Serviceverhalten garantieren.

Darüber hinaus wird durch die Erfindung auch dafür gesorgt, dass der MMS Relay/Servereinheit für das Speichern von Auslieferungsberichten oder Lesebestätigungen benötigte Speicherplatz signifikant reduziert werden kann, was erhebliche Kosteneinsparungen für den MMS Dienstleistungsanbieter mit sich bringt.

### Bezugszeichenliste

- 100: Nachrichtenflussdiagramm
- 101: Erster MMS-User-Agent A
- 102: Erste MMS Relay/Servereinheit A
- 103: Zweite MMS Relay/Servereinheit B
- 104: Zweiter MMS-User-Agent B
- 105: Multimedianachricht
- 106: Erste MM1-Schnittstelle
- 107: MM1_submit.REQ-Nachricht
- 108: MM1_submit.RES-Nachricht
- 109: MM4_forward.REQ-Nachricht
- 110: MM4_forward.RES-Nachricht
- 111: MM1_notification.REQ-Nachricht
- 112: MM1_notification.RES-Nachricht
- 113: MM1_retrieve.REQ-Nachricht
- 114: MM1_retrieve.RES-Nachricht
- 115: MM1_acknowledgement.REQ-Nachricht
- 116: MM4_delivery_report.REQ-Nachricht
- 117: MM5_delivery_report.RES-Nachricht
- 118: MM1_delivery_report.REQ-Nachricht
- 119: MM1_read_reply_recipient.REQ-Nachricht
- 120: MM4_read_reply_report.REQ-Nachricht
- 121: MM4_read_reply_report.RES-Nachricht
- 122: MM1_read_reply originator.REQ-Nachricht
- 123: MM4-Schnittstelle
- 124: Zweite MM1-Schnittstelle

- 200: Blockdiagramm
- 201: Erster MMS User-Agent A
- 202: Erste MMS Relay/Servereinheit A
- 203: Zweite MMS Relay/Servereinheit B
- 204: Zweiter MMS User-Agent B
- 205: Erster MMSE
- 206: Erste MM1-Schnittstelle
- 207: MM4-Schnittstelle
- 208: Zweiter MMSE
- 209: Zweite MM1-Schnittstelle

- 300: Blockdiagramm
- 301: MM2-Schnittstelle
- 302: Relaiseinrichtung
- 303: Servereinheit
- 304: Erste MM3-Schnittstelle
- 305: E-Mail-Servereinheit
- 306: Zweite MM3-Schnittstelle
- 307: Fax-Servereinheit
- 308: Dritte MM3-Schnittselle
- 309: UMS Servereinheit
- 310: N-te MM3-Schnittstelle
- 311: Servereinheit #N
- 312: MM5-Schnittstelle
- 313: Home Location Register
- 314: MM6-Schnittstelle
- 315: MMS Nutzerdatenbank
- 316: MM7-Schnittstelle
- 317: VAS Provider
- 318: MM8-Schnittstelle
- 319: Vergebührungs-Servereinheit

- 400: Ablaufdiagramm
- 401: Verfahrensschritt
- 402: Prüfschritt
- 403: Verfahrensschritt
- 404: Prüfschritt
- 405: Verfahrensschritt
- 406: Verfahrensschritt

- 500: Ablaufdiagramm
- 501: Verfahrensschritt
- 502: Prüfschritt
- 503: Verfahrensschritt
- 504: Prüfschritt
- 505: Verfahrensschritt
- 506: Verfahrensschritt

- 600: Nachrichtenflussdiagramm
- 601: MM1_acknowledgement.RES-Nachricht
- 602: MM1_delivery_report.RES-Nachricht
- 603: MM1_read_reply_recipient.RES-Nachricht
- 604: MM1_read_reply_originator.RES-Nachricht

- 700: Nachrichtenflussdiagramm
- 701: MM1_version_conflict.RES-Nachricht

In diesem Dokument sind folgende Veröffentlichungen zitiert:
[1] 3GPP TS 22.140 version 5.4.0, Release 5; Third Generation Partnership Project; Technical Specification Group Services and System Aspects; Multimedia Messaging Service (MMS); Service Aspects (Stage 1) http://www.3gpp.org/ftp/Specs/latest/Rel-5/22_series/
[2] 3GPP TS 23.140 version 5.b.0, Release 5; Third Generation Partnership Project; Technical Specification Group Terminals; Multimedia Messaging Service (MMS); Functional Description (Stage 2) http://www.3gpp.org/ftp/Specs/latest/Rel-5/23_series/
[3] OMA-MMS-ENC-vl_2-20030915-C; Open Mobile Alliance; MMS Encapsulation Specification v1.2; Candidate Version, 15-September-2003; http://www.openmobilealliance.org/release_program/mms _v12.html
[4] WAP-230-WSP "Wireless Session Protocol Specification", approved version 5-July-2001 http://www.openmobilealliance.org/tech/affiliates/Lic enseAgreement.asp?DocName=/wap/wap-230-wsp-20010705-a.pdf
[5] RFC 2616 "Hypertext Transfer Protocol - HTTP/1.1"; June 1999; http://www.ietf.org/rfc.html
[6] RFC 822 "Standard for the format of ARPA Internet Text Messages"; August 1982; http://www.ietf.org/rfc.html
[7] US 2002/0087549 A1
[8] WO 02/063838 A2
[9] "Multimedia Messaging Service Encapsulation Protocol Candidate Version 1.2", 23. Juli 2004, Seiten 1-118, Open Mobile Alliance
[10] WO 03/015368 A

## Patentansprüche

1. Verfahren zum Verarbeiten einer ersten Nachricht (105), welche von einer ersten Kommunikationseinrichtung (101, 102, 103, 104) gesendet wurde, durch eine zweite Kommunikationseinrichtung (101, 102, 103, 104),
• bei dem von der zweiten Kommunikationseinrichtung (101, 102, 103, 104) die Version des Multimedianachrichten-Dienstes ermittelt wird, gemäß welcher die erste Nachricht (105) codiert ist,
• bei dem von der zweiten Kommunikationseinrichtung (101, 102, 103, 104) überprüft wird, ob sie die erste Nachricht (105) gemäß der ermittelten Version verarbeiten kann,
• bei dem für den Fall, dass die zweite Kommunikationseinrichtung (101, 102, 103, 104) die erste Nachricht (105) verarbeiten kann, die zweite Kommunikationseinrichtung (101, 102, 103, 104) die erste Nachricht (105) gemäß der ermittelten Version des Multimedianachrichten-Dienstes verarbeitet, **dadurch gekennzeichnet, dass**
• für den Fall, dass die zweite Kommunikationseinrichtung (101, 102, 103, 104) die erste Nachricht (105) nicht verarbeiten kann, die zweite Kommunikationseinrichtung (101, 102, 103, 104) unter Verwendung einer gegenüber einer Basisversion des Multimedianachrichten-Dienstes hinzugefügten Multimedianachrichten-Dienst-Versionsunabhängigen Ergänzungsinformation eine zweite Nachricht erzeugt und an die erste Kommunikationseinrichtung (101, 102, 103, 104) sendet, wobei die Ergänzungsinformation in der zweiten Nachricht enthalten ist, und wobei aus der Ergänzungsinformation ermittelbar ist, welche Nachricht von der zweiten Kommunikationseinrichtung (101, 102, 103, 104) nicht verarbeitet werden kann.

2. Verfahren gemäß Anspruch 1,
bei dem die erste Nachricht (105) von der ersten Kommunikationseinrichtung (101, 102, 103, 104) zu der zweiten Kommunikationseinrichtung (101, 102, 103, 104) übertragen wird.

3. Verfahren gemäß Anspruch 1 oder 2,
bei dem die zweite Nachricht in ihrem Kopffeld eine vorgegebenen Versionskonflikt-Information als Ergänzungsinformation enthält, mit welcher angegeben wird, dass ein Versionskonflikt bei der ersten Nachricht (105) aufgetreten ist.

4. Verfahren gemäß Anspruch 3,
bei dem die Versionskonflikt-Information in einen Transaktions-Identifikationsangabe-Kopffeldbereich enthalten ist.

5. Verfahren gemäß Anspruch 3 oder 4,
bei dem die Versionskonflikt-Information eine die erste Kommunikationseinrichtung (101, 102, 103, 104) identifizierende Information enthält.

6. Verfahren gemäß Anspruch 5,
bei dem die Versionskonflikt-Information die Adresse der ersten Kommunikationseinrichtung (101, 102, 103, 104) enthält.

7. Verfahren gemäß Anspruch 3 oder 4,
bei dem die Versionskonflikt-Information die Nachrichten-Identifikationsangabe der ersten Nachricht (105) enthält.

8. Verfahren gemäß einem der Ansprüche 1 bis 7,
bei dem als Ergänzungsinformation eine gegenüber der Basisversion des Multimedianachrichten-Dienstes zusätzliche Protokolldateneinheit verwendet wird.

9. Verfahren gemäß Anspruch 8,
bei dem die zusätzliche Protokolldateneinheit eine Antwortnachricht zu einer in der Basisversion des Multimedianachrichten-Dienstes vorgesehenen Anforderungsnachricht verwendet wird, wobei die Antwortnachricht und die zugehörige Anforderungsnachricht ein Anforderungs-/Antwort-Nachrichten-Paar bilden.

10. Verfahren gemäß Anspruch 9,
bei dem die Anforderungsnachricht und die Antwortnachricht des Anforderungs-/Antwort-Nachrichten-Paar die gleiche Transaktions-Identifikationsangabe enthalten.

11. Verfahren gemäß einem der Ansprüche 7 bis 10,
bei dem die zweite Nachricht eine Kopie der ersten Nachricht (105) enthält.

12. Verfahren gemäß einem der Ansprüche ,1 bis 11,
bei dem die erste Nachricht (105) und/oder die zweite Nachricht eine Mobilfunk-Protokolldateneinheit sind/ist.

13. Verfahren gemäß Anspruch 12,
bei dem die erste Nachricht (105) und/oder die zweite Nachricht eine 3GPP-Protokolldateneinheit sind/ist.

14. Verfahren gemäß Anspruch 13,
bei dem die erste Nachricht (105) und/oder die zweite Nachricht eine 3GPP Abstract Message sind/ist.

15. Verfahren gemäß Anspruch 12,
bei dem die erste Nachricht (105) und/oder die zweite Nachricht eine OMA-MMS-Protokolldateneinheit sind/ist.

16. Verfahren gemäß einem der Ansprüche 1 bis 15,
• bei dem die erste Kommunikationseinrichtung (101, 102, 103, 104) ein Mobilfunk-Kommunikations-Endgerät ist, und
• bei dem die zweite Kommunikationseinrichtung (101, 102, 103, 104) eine Multimedianachricht-Mobilfunk-Relaiseinrichtung ist.

17. Verfahren gemäß einem der Ansprüche 1 bis 15,
• bei dem die erste Kommunikationseinrichtung (101, 102, 103, 104) eine Multimedianachricht-Mobilfunk-Relaiseinrichtung ist, und
• bei dem die zweite Kommunikationseinrichtung (101, 102, 103, 104) ein Mobilfunk-Kommunikations-Endgerät ist.

18. Verfahren gemäß einem der Ansprüche 1 bis 17,
bei dem als Basisversion des Multimedianachrichten-Dienstes die MMS Version 1.0 verwendet wird.

19. Kommunikationseinrichtung (101, 102, 103, 104) zum Verarbeiten einer ersten Nachricht (105),
• mit einer Versions-Ermittlungseinheit, welche eingerichtet ist zum Ermitteln der Version des Multimedianachrichten-Dienstes, gemäß welcher die erste Nachricht (105) codiert ist,
• mit einer Prüfeinheit, welche eingerichtet ist zum Prüfen, ob die Kommunikationseinrichtung (101, 102, 103, 104) die erste Nachricht (105) gemäß der ermittelten Version verarbeiten kann, und
• mit einer Verarbeitungseinheit, welche eingerichtet ist, eine empfangene Nachricht gemäß einer vorgegebenen Version zu verarbeiten,
**dadurch gekennzeichnet, dass** die Kommunikationseinrichtung (101, 102, 103, 104) eine Versionskonflikteinheit aufweist, welche eingerichtet ist, für den Fall, dass die Kommunikationseinrichtung (101, 102, 103, 104) die erste Nachricht (105) nicht verarbeiten kann, unter Verwendung einer gegenüber einer Basisversion des Multimedianachrichten-Dienstes hinzugefügten Multimedianachrichten-Dienst-Versionsunabhängigen Ergänzungsinformation eine zweite Nachricht zu erzeugen, wobei die Ergänzungsinformation in der zweiten Nachricht enthalten ist, und wobei aus der Ergänzungsinformation ermittelbar ist, welche Nachricht von der zweiten Kommunikationseinrichtung (101, 102, 103, 104) nicht verarbeitet werden kann.

20. Kommunikationseinrichtung (101, 102, 103, 104) gemäß Anspruch 19,
eingerichtet als Mobilfunk-Kommunikations-Endgerät.

21. Kommunikationseinrichtung (101, 102, 103, 104) gemäß Anspruch 19,
eingerichtet als Multimedianachricht-Mobilfunk-Relaiseinrichtung.

## Claims

1. Method for processing a first message (105), which has been sent by a first communication device (101, 102, 103, 104), by a second communication device (101, 102, 103, 104),
• wherein the version of the multimedia message service, according to which the first message (105) is coded, is determined by the second communication device (101, 102, 103, 104)
• wherein it is checked by the second communication device (101, 102, 103, 104) whether it can process the first message (105) according to the version determined,
• in which, in case that the second communication device (101, 102, 103, 104) can process the first message (105), the second communication device (101, 102, 103, 104) processes the first message (105) according to the determined version of the multimedia message service, **characterized in that**
• in case that the second communication device (101, 102, 103, 104) cannot process the first message (105), the second communication device (101, 102, 103, 104) generates a second message using multimedia message service version independent supplement information added with respect to a base version of the multimedia message service and sends it to the first communication device (101, 102, 103, 104), wherein the supplement information is included in the second message and wherein it can be determined from the supplement information what message cannot be processed by the second communication device (101, 102, 103, 104).

2. Method according to claim 1, wherein the first message (105) is transmitted from the first communication device (101, 102, 103, 104) to the second communication device (101, 102, 103, 104).

3. Method according to claim 1 or 2,
wherein the second message includes a predetermined version conflict information as supplement information in its header, with which it is indicated that a version conflict has occurred regarding the first message (105).

4. Method according to claim 3,
wherein the version conflict information is included in a transaction identification indication header area.

5. Method according to claim 3 or 4,
wherein the version conflict information includes information identifying the first communication device (101, 102, 103, 104) .

6. Method according to claim 5,
wherein the version conflict information includes the address of the first communication device (101, 102, 103, 104).

7. Method according to claim 3 or 4,
wherein the version conflict information includes the message identification indication of the first message (105).

8. Method according to one of the claims 1 to 7,
wherein an, with respect to the base version of the multimedia message service, additional protocol data unit is used as supplement information.

9. Method according to claim 8,
wherein the additional protocol data unit is used a response message to a request message provided in the base version of the multimedia message service, wherein the response message and the associated request message form a request/response message pair.

10. Method according to claim 9,
wherein the request message and the response message of the request/response message pair include the same transaction identification indication.

11. Method according to one of the claims 7 to 10,
wherein the second message includes a copy of the first message (105).

12. Method according to one of the claims 1 to 11,
wherein the first message (105) and/or the second message is/are a mobile radio protocol data unit.

13. Method according to claim 12,
wherein the first message (105) and/or the second message is/are a 3GPP protocol data unit.

14. Method according to claim 13,
wherein the first message (105) and/or the second message is/are a 3GPP Abstract Message.

15. Method according to claim 12,
wherein the first message (105) and/or the second message is/are an OMA MMS protocol data unit.

16. Method according to one of the claims 1 to 15,
• wherein the first communication device (101, 102, 103, 104) is a mobile radio communication terminal and
• wherein the second communication device (101, 102, 103, 104) is a multimedia message mobile radio relay device.

17. Method according to one of the claims 1 to 15,
• wherein the first communication device (101, 102, 103, 104) is a multimedia message mobile radio relay device and
• wherein the second communication device (101, 102, 103, 104) is a mobile radio communication terminal.

18. Method according to one of the claims 1 to 17,
wherein MMS version 1.0 is used as base version of the multimedia message service.

19. Communication device (101, 102, 103, 104) for processing a first message (105)
• having a version determining unit configured to determine the version of the multimedia message service, according to which the first message (105) is coded
• having a checking unit configured to check whether the communication device (101, 102, 103, 104) can process the first message (105) according to the version determined, and
• having a processing unit configured to process a received message according to a predetermined version,
**characterized in that** the communication device (101, 102, 103, 104) comprises a version conflict unit configured to generate, in case that the communication device (101, 102, 103, 104) cannot process the first message (105), a second message using multimedia message service version independent supplement information added with respect to a base version of the multimedia message service wherein the supplement information is included in the second message and wherein it can be determined from the supplement information what message cannot be processed by the second communication device (101, 102, 103, 104).

20. Communication device (101, 102, 103, 104) according to claim 19,
being configured as mobile radio communication terminal.

21. Communication device (101, 102, 103, 104) according to claim 19,
being configured as multimedia message mobile radio relay device.

## Revendications

1. Procédé de traitement par un deuxième dispositif (101, 102, 103, 104) de communication d'un premier message (105) qui a été envoyé par un premier dispositif (101, 102, 103, 104) de communication,
• dans lequel il est déterminé par le deuxième dispositif (101, 102, 103, 104) de communication la version du service de messages multimédia suivant laquelle le premier message (105) est codée,
• dans lequel il est contrôlé par le deuxième dispositif (101, 102, 103, 104) de communication si le premier message (105) selon la version déterminée peut être traité,
• dans lequel, dans le cas où le deuxième dispositif (101, 102, 103, 104) de communication peut traiter le premier message (105), le deuxième dispositif (101, 102, 103, 104) de communication traite le premier message (105) suivant la version déterminée du service de messages multimédia, **caractérisé en ce que**,
• dans le cas où le deuxième dispositif (101, 102, 103, 104) de communication ne peut pas traiter le premier message (105), le deuxième dispositif (101, 102, 103, 104) de communication produit, en utilisant une information de complément indépendante d'une version du service de messages multimédia ajoutée par rapport à une version de base du service de messages multimédia, un deuxième message et l'envoie au premier dispositif (101, 102, 103, 104) de communication, l'information de complément étant contenue dans le deuxième message et dans lequel il peut être déterminé à partir de l'information de complément le message qui ne peut pas être traité par le deuxième dispositif (101, 102, 103, 104) de communication.

2. Procédé suivant la revendication 1, dans lequel le premier message (105) est transmis du premier dispositif (101, 102, 103, 104) de communication au deuxième dispositif (101, 102, 103, 104) de communication.

3. Procédé suivant la revendication 1 ou 2, dans lequel le deuxième message contient dans son en-tête une information prescrite de conflit de version en tant qu'information de complément par laquelle il est indiqué qu'un conflit de version s'est produit pour le premier message (105).

4. Procédé suivant la revendication 3, dans lequel l'information de conflit de version est contenue dans une partie d'en-tête d'indication de transaction-identification.

5. Procédé suivant la revendication 3 ou 4, dans lequel l'information de conflit de version contient une information identifiant le premier dispositif (101, 102, 103, 104) de communication.

6. Procédé suivant la revendication 5, dans lequel l'information de conflit de version contient l'adresse du premier dispositif (101, 102, 103, 104) de communication.

7. Procédé suivant la revendication 3 ou 4, dans lequel l'information de conflit de version contient l'indication d'identification de message du premier message (105).

8. Procédé suivant l'une des revendications 1 à 7, dans lequel on utilise comme information de complément une unité de données de protocole supplémentaire par rapport la version de base du service de messages multimédia.

9. procédé suivant la revendication 8, dans lequel l'unité de données de protocole supplémentaire utilise un message de réponse, un message de demande prévu dans la version de base du service de messages multimédia, le message de réponse et le message de demande associés formant une paire de messages de demande/réponse.

10. Procédé suivant la revendication 9, dans lequel le message de demande et le message de réponse de la paire de messages de demande/réponse contiennent les mêmes indications de transaction-identification.

11. Procédé suivant l'une des revendications 7 à 10, dans lequel le deuxième message contient une copie du premier message (105).

12. Procédé suivant l'une des revendications 1 à 11, dans lequel le premier message (105) et/ou le deuxième message sont/est une unité de données de protocole de téléphonie mobile.

13. Procédé suivant la revendication 12, dans lequel le premier message (105) et/ou le deuxième message sont/est une unité de données de protocole 3GPP.

14. Procédé suivant la revendication 13, dans lequel le premier message (105) et/ou le deuxième message sont/est un 3GPP Abstract Message.

15. Procédé suivant la revendication 12, dans lequel le premier message (105) et/ou le deuxième message sont/est une unité de données de protocole OMA-MMS.

16. Procédé suivant l'une des revendications 1 à 15,
• dans lequel le premier dispositif (101, 102, 103, 104) de communication est un terminal de communication de téléphonie mobile, et
• dans lequel le deuxième dispositif (101, 102, 103, 104) de communication est un dispositif de relais de téléphonie mobile de messages multimédia.

17. Procédé suivant l'une des revendications 1 à 15
• dans lequel le premier dispositif (101, 102, 103, 104) de communication est un dispositif de relais de téléphonie mobile de messages multimédia, et
• dans lequel le deuxième dispositif (101, 102, 103, 104) de communication est un terminal de communication de téléphonie mobile.

18. Procédé suivant l'une des revendications 1 à 17, dans lequel on utilise la version MMS 1.0 comme version de base du service de messages multimédia.

19. Dispositif (101, 102, 103, 104) de communication pour traiter un premier message (105),
• ayant une unité de détermination de version, qui est conçue pour déterminer la version du service de messages multimédia suivant laquelle le premier message (105) est codé,
• ayant une unité de contrôle, qui est conçue pour contrôler si le dispositif (101, 102, 103, 104) de communication peut traiter le premier message (105) suivant la version déterminée, et
• ayant une unité de traitement qui est conçue pour traiter un message reçu suivant une version prescrite,
**caractérisé en ce que** le dispositif (101, 102, 103, 104) de communication a une unité de conflit de version qui est conçue pour, dans le cas où le dispositif (101, 102, 103, 104) de communication ne peut pas traiter le premier message (105), produire en utilisant une information de complément indépendant d'une version de service de messages multimédia ajoutée par rapport à une version de base du service de messages multimédia, un deuxième message, l'information de complément étant contenue dans le deuxième message, et dans lequel il peut être déterminé, à partir d'informations de complément, le message qui ne peut pas être traité par le deuxième dispositif (101, 102, 103, 104) de communication.

20. Dispositif (101, 102, 103, 104) de communication suivant la revendication 19 conçu sous la forme d'un terminal de communication de téléphonie mobile.

21. Dispositif (101, 102, 103, 104) de communication suivant la revendication 19 conçu comme dispositif relais de téléphonie mobile de messages multimédia.
